# EUROPEAN PATENT SPECIFICATION

(11) **EP 2 330 458 B1**
(45) Date of publication and mention of the grant of the patent: **18.12.2013**
(21) Application number: 09811251.9
(22) Date of filing: 28.08.2009
(51) Int. Cl.: G02F 1/1337, C08F 20/20, C08F 20/30, C08F 20/58, C08L 33/14, C08L 33/24, C08L 79/08

(54) **ALIGNMENT FILM, ALIGNMENT FILM MATERIAL, LIQUID CRYSTAL DISPLAY DEVICE COMPRISING ALIGNMENT FILM, AND METHOD FOR MANUFACTURING SAME**
ORIENTIERUNGSFILM, ORIENTIERUNGSFILMMATERIAL, FLÜSSIGKRISTALLANZEIGEVORRICHTUNG MIT DEM ORIENTIERUNGSFILM UND HERSTELLUNGSVERFAHREN DAFÜR
FILM D'ALIGNEMENT, MATIÈRE DE FILM D'ALIGNEMENT, DISPOSITIF D'AFFICHAGE À CRISTAUX LIQUIDES COMPRENANT UN FILM D'ALIGNEMENT ET SON PROCÉDÉ DE FABRICATION

(30) Priority: 03.09.2008 JP 2008225913
(43) Date of publication of application: 08.06.2011
(73) Proprietor: Sharp Kabushiki Kaisha, Osaka-shi, Osaka 545-8522 (JP)
(72) Inventor: NAKANISHI, Yohei, Osaka 545-8522 (JP); MIZUSAKI, Masanobu, Osaka 545-8522 (JP)
(74) Representative: Müller - Hoffmann & Partner
(86) International application number: PCT/JP2009/004204
(87) International publication number: WO 2010/026721

(56) References cited:
- EP-A1- 1 498 468
- JP-A- 2006 215 184
- JP-A- 2007 304 509
- US-A1- 2003 232 930
- DATABASE WPI Week 200664 Thomson Scientific, London, GB; AN 2006-615928 XP002680722, & JP 2006 215184 A (JSR CORP) 17 August 2006 (2006-08-17)

## Description

### TECHNICAL FIELD

The present invention relates to an alignment film, an alignment film material, and a liquid crystal display device having the alignment film, as well as production methods thereof.

### BACKGROUND ART

Liquid crystal display devices are used not only as small-sized display devices, e.g., the display sections of mobile phones, but also as large-sized television sets. Liquid crystal display devices of the TN (Twisted Nematic) mode, which have often been used conventionally, have relatively narrow viewing angles. In recent years, however, liquid crystal display devices with wide viewing angles have been produced, e.g., the IPS (In-Plane Switching) mode and the VA (Vertical Alignment) mode. Among such modes with wide viewing angles, the VA mode is adopted in a large number of liquid crystal display devices because of an ability to realize a high contrast ratio. Alignment films in generic VA-mode liquid crystal display devices are made of polyimide, which has advantages in terms of thermal resistance, solvent resistance, hygroscopicity, and so on.

As one kind of VA mode, the MVA (Multi-domain Vertical Alignment) mode is known, under which a plurality of liquid crystal domains are created in one pixel region. An MVA-mode liquid crystal display device includes alignment regulating structures provided on the liquid-crystal-layer side of at least one of a pair of opposing substrates, between which a vertical-alignment type liquid crystal layer is interposed. The alignment regulating structures may be linear slits (apertures) or ribs (protruding structures) that are provided on electrodes, for example. The alignment regulating structures provide alignment regulating forces from one side or both sides of the liquid crystal layer, thus creating a plurality of liquid crystal domains (typically four liquid crystal domains) with different alignment directions, whereby the viewing angle characteristics are improved.

As another kind of VA mode, the CPA (Continuous Pinwheel Alignment) mode is also known. In a generic liquid crystal display device of the CPA mode, pixel electrodes of a highly symmetrical shape are provided, and on a counter electrode, protrusions are provided corresponding to the centers of liquid crystal domains. These protrusions are also referred to as rivets. When a voltage is applied, in accordance with an oblique electric field which is created with the counter electrode and a highly symmetrical pixel electrode, liquid crystal molecules take an inclined alignment of a radial shape. Moreover, the inclined alignment of the liquid crystal molecules are stabilized due to the alignment regulating forces of side slopes of the rivets. Thus, the liquid crystal molecules in one pixel are aligned in a radial shape, thereby improving the viewing angle characteristics.

Unlike in TN-mode liquid crystal display devices in which the pretilt direction of liquid crystal molecules is defined by an alignment film, alignment regulating forces in an MVA-mode liquid crystal display device are applied to the liquid crystal molecules by linear slits or ribs. Therefore, depending on distances from the slits and ribs, the alignment regulating forces for the liquid crystal molecules within a pixel region will differ, thus resulting in differing response speeds of the liquid crystal molecules within the pixel. Similarly, also in the CPA mode, the response speeds of the liquid crystal molecules will differ within the pixel, and the differences in response speed will become more outstanding as the pixel electrodes increase in size. Furthermore, in a VA-mode liquid crystal display device, the light transmittance in the regions in which slits, ribs, or rivets are provided is low, thus making it difficult to realize a high luminance.

In order to avoid the above problems, use of an alignment film for applying alignment regulating forces to liquid crystal molecules in a VA-mode liquid crystal display device is also known, such that the liquid crystal molecules will tilt from the normal direction of a principal face of the alignment film in the absence of an applied voltage (see, for example, Patent Documents 1 and 2).

In Patent Document 1, the alignment film is subjected to an alignment treatment such as rubbing. The alignment film aligns the liquid crystal molecules so that the liquid crystal molecules will be aligned with a tilt from the normal direction of its principal face even in the absence of an applied voltage, whereby an improved response speed is realized. Furthermore, since the alignment film defines the pretilt azimuth of liquid crystal molecules so that the liquid crystal molecules within one pixel will be symmetrically aligned, the viewing angle characteristics are improved. In a liquid crystal display device disclosed in Patent Document 1, four liquid crystal domains are formed in a liquid crystal layer in accordance with a combination of two alignment regions of a first alignment film and two alignment regions of a second alignment film, whereby a wide viewing angle is realized.

In Patent Document 2, by obliquely radiating light onto an alignment film having a photoreactive functional group as a side chain, a pretilt is conferred so that the liquid crystal molecules will be inclined from the normal direction of a principal face of the alignment film in the absence of an applied voltage. An alignment film to which a pretilt is conferred through such a photo-alignment treatment may also be referred to as a photo-alignment film. In the photo-alignment film disclosed in Patent Document 2, fluctuations in the pretilt angle are controlled to 1° or less, by using an alignment film material which includes a bonded structure of photosensitive groups.

### CITATION LIST

### PATENT LITERATURE

[Patent Document 1] Japanese Laid-Open Patent Publication No. 11-352486
[Patent Document 2] The pamphlet of International Publication No. 2006/121220

US 2003/0232930 A1 provides novel hybrid polymer optical alignment layers for inducing alignment of a liquid crystal medium. Hybrid polymers are prepared from at least one component selected from the group consisting of monomer, macromonomer and polymer within the class of polyimides, poly(amic acids) and esters thereof and at least one component selected from the group consisting of addition monomer and functionalized addition polymer wherein the two components are covalently bonded to form a copolymer.

EP 1 498 468 A1 relates to a liquid crystal display device produced through the steps of injecting a polymerizable monomer-containing liquid crystal composition between two substrates and, while applying a voltage between opposing transparent electrodes of the substrates, polymerizing the monomer, wherein the polymerizable monomer contained in the liquid crystal composition has one or more ring or condensed ring structures and functional groups bonded directly to the ring or condensed ring structure.

### SUMMARY OF INVENTION

### TECHNICAL PROBLEM

Generally speaking, when a liquid crystal display device keeps displaying the same pattern for a long time, the previous pattern may remain even after the displayed image is changed. Such a phenomenon is also called image sticking. For example, after displaying white in a partial region of the screen and black in another region for a long time, if the entire liquid crystal panel is caused to display the same intermediate gray scale level, the region previously displaying white may appear slightly brighter than the region previously displaying black.

One cause of such image sticking is charge accumulation. The amount of charge accumulated in the region which was displaying black is different from the amount of charge accumulated in the region which was displaying white, and an electric field occurs because impurity ions in the liquid crystal accumulate at the interface between the alignment film and the liquid crystal layer. Therefore, when entirely switched to the same gray scale level, different voltages are applied across the layers of liquid crystal in the respective regions which were displaying white and black, thus being perceived as image sticking.

Note that image sticking caused by such charge accumulation can be somewhat suppressed by applying voltages of inverted polarities to the respective pixels. Therefore, an image sticking caused by charge accumulation is also called DC image sticking. The driving which involves applying voltages of inverted polarities for the sake of suppressing DC image sticking is also called polarity inversion driving. In actuality, even with polarity inversion driving, it is difficult to apply voltages of completely symmetric polarities and thus a resultant image sticking may be perceived as flickering.

Moreover, image sticking will also occur when minute changes in the pretilt angle occur. When the pretilt angle changes, the V-T characteristics are affected, and thus the transmittance will vary even if the same voltage is applied. Since the applied voltage when displaying white is different from the applied voltage when displaying black, the amount of change in the pretilt angle will vary depending on the applied voltage. When later entirely switched to the same gray scale level, image sticking may be perceived due to changes in the pretilt angle. Such image sticking cannot be suppressed even by performing polarity inversion driving, and is also called AC image sticking.

The present invention has been made in view of the above problems, and an objective thereof is to provide an alignment film which suppresses image sticking caused by changes in the pretilt angle, an alignment film material for forming the aforementioned alignment film, and a liquid crystal display device having the alignment film, as well as production methods thereof.

### SOLUTION TO PROBLEM

An alignment film according to the present invention is an alignment film comprising polyimide and a polyvinyl compound, wherein, the polyvinyl compound contains a polymerization product of a polyfunctional monomer having a plurality of vinyl groups; and the polyfunctional monomer is represented by general formula (1) Pl-A1-(Z1-A2)n-P2 (in general formula (1), P1 and P2 are, independently, acrylate, methacrylate, acrylamide or methacrylamide; A1 and A2 represent, independently, 1,4-phenylene, 1,4-cyclohexane or 2,5-thiophene, or naphthalene-2,6-diyl, anthracene-2,7-diyl, anthracene-1,8-diyl, anthracene-2,6-diyl or anthracene-1,5-diyl; and Z1 is a -COO- group, a -OCO- group, a -O- group, a - CONH- group or a single bond, where n is 0 or 1).

In one embodiment, each of plurality of vinyl groups of the polyfunctional monomer is a part of a methacrylate group or an acrylate group.

In one embodiment, the polyfunctional monomer has two or more directly-bonded ring structures or one or more condensed ring structures between the plurality of vinyl groups.

In the alignment film according to claim 1 both of the polyimide and the polyvinyl compound are present on a surface and in an interior thereof.

In one embodiment, a concentration of the polyvinyl compound at the surface is higher than a concentration of the polyvinyl compound in the interior.

In one embodiment, the alignment film is a photo-alignment film.

In one embodiment, the polyimide has a side chain containing a photoreactive functional group.

In one embodiment, the photoreactive functional group includes a cinnamate group.

A liquid crystal display device according to the present invention is a liquid crystal display device comprising an active matrix substrate, a counter substrate, and a liquid crystal layer provided between the active matrix substrate and the counter substrate, wherein at least one of the active matrix substrate and the counter substrate comprises the aforementioned alignment film.

In one embodiment, the alignment film regulates liquid crystal molecules in the liquid crystal layer so that the liquid crystal molecules are inclined with respect to a normal direction of a principal face of the alignment film in the absence of an applied voltage.

In one embodiment, the liquid crystal display device has a plurality of pixels; and in each of the plurality of pixels, the liquid crystal layer has a plurality of liquid crystal domains having respectively different reference alignment azimuths.

In one embodiment, the plurality of liquid crystal domains are four liquid crystal domains.

A method of producing an alignment film according to the present invention comprises the steps of: providing an alignment film material containing a mixture of a polyimide precursor and a polyfunctional monomer having a plurality of vinyl groups; and forming polyimide from the polyimide precursor, and forming a polyvinyl compound from the polyfunctional monomer.

In one embodiment, the step of forming the polyvinyl compound comprises a step of polymerizing the polyfunctional monomer.

In one embodiment, in the step of providing the alignment film material, the polyfunctional monomer has two or more directly-bonded ring structures or one or more condensed ring structures between the plurality of vinyl groups, and a concentration of the polyfunctional monomer on the basis of the alignment film material is in the range of no less than 2wt% and no more than 50wt%.

In one embodiment, the step of forming the polyimide and the polyvinyl compound comprises a step of performing a heat treatment.

In one embodiment, the step of performing a heat treatment comprises the steps of: performing a first heat treatment; and after performing the first heat treatment, performing a second heat treatment at a higher temperature than that of the first heat treatment.

A method of producing a liquid crystal display device according to the present invention comprises the steps of: forming an active matrix substrate and a counter substrate; and forming a liquid crystal layer between the active matrix substrate and the counter substrate, wherein, the step of forming the active matrix substrate and the counter substrate comprises the steps of: providing a first transparent substrate having a pixel electrode thereon and a second transparent substrate having a counter electrode thereon; and producing an alignment film on at least one of the pixel electrode and the counter electrode according to the above production method.

In one embodiment, in the step of forming the liquid crystal layer, the alignment film, the alignment film regulates liquid crystal molecules in the liquid crystal layer so that the liquid crystal molecules are inclined with respect to a normal direction of a principal face of the alignment film in the absence of an applied voltage.

In one embodiment, the step of forming the active matrix substrate and the counter substrate further comprises a step of performing an alignment treatment for the alignment film.

In one embodiment, the step of performing the alignment treatment further comprises a step of irradiating the alignment film with light.

In one embodiment, the light has a wavelength in the range of no less than 250 nm and no more than 400 nm.

In one embodiment, the step of performing the alignment treatment comprises a step of radiating the light from a direction which is inclined by no less than 5° and no more than 85° with respect to a normal direction of a principal face of the alignment film.

In one embodiment, the light is unpolarized light.

In one embodiment, the light is linearly polarized light, elliptically polarized light, or circularly polarized light.

In one embodiment, the step of performing the alignment treatment comprises a step of performing a rubbing treatment for the alignment film.

An alignment film material according to the present invention comprises a polyimide precursor and a polyfunctional monomer having a plurality of vinyl groups.

### ADVANTAGEOUS EFFECTS OF INVENTION

According to the present invention, there are provided: an alignment film which suppresses image sticking caused by changes in the pretilt angle, an alignment film material, a liquid crystal display device having the alignment film, and production methods thereof.

### BRIEF DESCRIPTION OF DRAWINGS

[FIG. 1] A schematic plan view of an embodiment of an alignment film according to the present invention.
[FIG. **2**] **(a)** is a schematic diagram of an embodiment of a liquid crystal display device according to the present invention; and **(b)** is a schematic diagram of a liquid crystal panel of the liquid crystal display device of the present embodiment.
[FIG. **3**] **(a)** to (c) are schematic diagrams each illustrating a production method of the liquid crystal display device of the present embodiment.
[FIG. **4**] **(a)** is a schematic diagram of an alignment film of the liquid crystal display device of the present embodiment; **(b)** is a schematic diagram of the alignment film; and **(c)** is a schematic diagram showing alignment directions of liquid crystal molecules in the centers of liquid crystal domains.
[FIG. **5**] **(a)** is a schematic diagram showing an alignment state of liquid crystal molecules in a liquid crystal display device of Example 1-1; and **(b)** is a schematic diagram showing alignment treatment directions for the first and second alignment films as viewed from the viewer's side.
[FIG. **6**] A schematic diagram showing alignment treatment directions for the first and second alignment films as viewed from the viewer's side, in a liquid crystal display device of Example 3.
[FIG. **7**] A schematic diagram showing alignment treatment directions for the first and second alignment films as viewed from the viewer's side, in a liquid crystal display device of Example 4.

### DESCRIPTION OF EMBODIMENTS

Hereinafter, with reference to the drawings, an embodiment of an alignment film, alignment film material, and liquid crystal display device having the alignment film according to the present invention will be described.

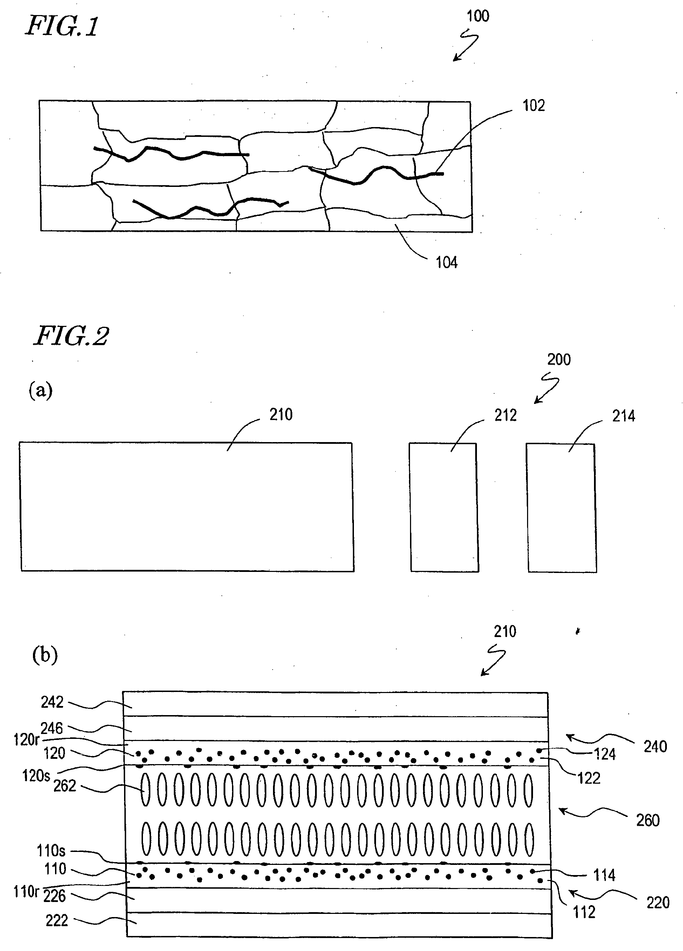

FIG. **1** shows a schematic diagram of an alignment film **100** of the present embodiment. The alignment film **100** contains polyimide **102** and a polyvinyl compound **104**. In at least a partial surface region of the alignment film **100**, the main chains of the polyimide **102** align essentially in one direction. The polyimide **102** is formed by imidizing a polyimide precursor.

The alignment film **100** of the present embodiment contains not only the polyimide **102** but also the polyvinyl compound **104**, the polyvinyl compound **104** containing a polymerization product of a polyfunctional monomer. The polyvinyl compound **104** is formed through polymerization of a polyfunctional monomer having a plurality of vinyl groups, and the polyfunctional monomer is biphenyldimethacrylate or biphenyl diacrylate, for example. Thus, the vinyl groups of the polyfunctional monomer are parts of methacrylate groups or acrylate groups, for example.

The polyfunctional monomer is represented by general formula (1) P1-A1-(Z1-A2)n-P2 (in general formula (1), P1 and P2 are, independently, acrylate, methacrylate, acrylamide or methacrylamide; A1 and A2 represent, independently, 1,4-phenylene, 1,4-cyclohexane or 2,5-thiophene, or naphthalene-2,6-diyl, anthracene-2,7-diyl, anthracene-1,8-diyl, anthracene-2,6-diyl or anthracene-1,5-diyl; and Z1 is a -COO-group, a -OCO- group, a -O- group, a -CONH- group or a single bond, where n is 0 or 1). Moreover, at least one of A1 and A2 may be substituted by one fluorine group.

Since the polyfunctional monomer has a plurality of vinyl groups, the polyvinyl compound **104** which is formed through polymerization of the polyfunctional monomer has a three-dimensional network structure. Moreover, this polyfunctional monomer has two or more directly-bonded ring structures or one or more condensed ring structures between the plurality of vinyl groups, and has a low degree of freedom with respect to deformation, such that the polyvinyl compound **104** is unlikely to deform under stress. Thus, by containing the polyvinyl compound **104**, the alignment film **100** is structurally stabilized, whereby fluctuations of the alignment characteristics are suppressed.

Hereinafter, with reference to FIG. **2**, a liquid crystal display device **200** having alignment films **110** and **120** according to the present embodiment will be described. FIG. **2(a)** shows a schematic diagram of the liquid crystal display device **200**. The liquid crystal display device **200** includes a liquid crystal panel **210**, a driving circuit **212** for driving the liquid crystal panel **210**, and a control circuit **214** for controlling the driving circuit **212**. Although not shown, the liquid crystal display device **200** may include a backlight as necessary.

As shown in FIG. **2(b)**, the liquid crystal panel **210** includes an active matrix substrate **220** having the first alignment film **110**, a counter substrate **240** having the second alignment film **120**, and a liquid crystal layer **260** provided between the active matrix substrate **220** and the counter substrate **240**. The active matrix substrate **220** further includes a first transparent substrate **222** and pixel electrodes **226**, such that the first alignment film **110** covers the pixel electrodes **226**. Moreover, the counter substrate **240** further includes a second transparent substrate **242** and a counter electrode **246**, such that the second alignment film **120** covers the counter electrode **246**. The liquid crystal layer **260** is interposed between the active matrix substrate **220** and the counter substrate **240**.

The liquid crystal display device **200** includes pixels composing a matrix of a plurality of rows and a plurality of columns. On the active matrix substrate **220**, at least one switching element (e.g., thin film transistor (Thin Film Transistor: TFT))(not shown in the figure) is provided for each pixel, and the active matrix substrate **220** is also referred to a TFT substrate. In the present specification, a "pixel" refers to the smallest unit that expresses a specific gray scale level in displaying; in the case of multicolor displaying, a "pixel" corresponds to a unit that expresses a gray scale level of each of R, G, and B, for example, and is also referred to as a dot. A combination of an R pixel, a G pixel, and a B pixel composes a single color displaying pixel. A "pixel region" refers to a region of the liquid crystal panel **210** that corresponds to a "pixel" in displaying.

Although not shown, a polarizer is provided on each of the active matrix substrate **220** and the counter substrate **240**. Therefore, the two polarizers are disposed so as to oppose each other with the liquid crystal layer **260** interposed therebetween. The transmission axes (polarization axes) of the two polarizers are positioned so as to be orthogonal to each other, such that one of them extends along the horizontal direction (row direction), whereas the other extends along the vertical direction (column direction).

The first alignment film **110** contains polyimide **112** and a polyvinyl compound **114**, and the polyvinyl compound **114** contains a polymerization product of a polyfunctional monomer having a plurality of vinyl groups. The second alignment film **120** contains polyimide **122** and a polyvinyl compound **124**, and the polyvinyl compound **124** contains a polymerization product of a polyfunctional monomer having a plurality of vinyl groups. The first alignment film **110** and second alignment film **120** as such are formed from an alignment film material which contains a polyimide precursor and a polyfunctional monomer having a plurality of vinyl groups. The polyimide **112**, **122** is formed by imidizing the polyimide precursor. The polyvinyl compound **114**, **124** is formed through polymerization of the polyfunctional monomer. The polymerization is performed by applying heat or light to the polyfunctional monomer. For example, after applying an alignment film material containing a mixture of a polyimide precursor and a polyfunctional monomer onto the pixel electrodes **226** and the counter electrode **246**, a heat treatment is performed to evaporate the solvent, whereby the first and second alignment films **110** and **120** containing the polyimide **112**, **122** and the polyvinyl compound **114**, **124** is formed. The heat treatment is performed twice at different temperatures, for example.

The liquid crystal layer **260** contains a nematic liquid crystal material (liquid crystal molecules **262**) having negative dielectric anisotropy. The first alignment film **110** and the second alignment film **120** are each treated so that the pretilt angle of the liquid crystal molecules **262** is less than 90° with respect to the surface of the vertical alignment film. The pretilt angle of the liquid crystal molecules **262** is an angle between principal faces of the first alignment film **110** and the second alignment film **120** and the major axis of each liquid crystal molecule **262** that is regulated in a pretilt direction.

Although the liquid crystal layer **260** is of a vertical-alignment type, due to the polyimide **112**, **122**, the liquid crystal molecules **262** in its neighborhood are slightly inclined from the normal directions of the principal faces of the first and second alignment films **110** and **120**. The pretilt angle is within a range from 85° to 89.7°, for example. The side chain of the polyimide **112**, **122** defines the pretilt direction of the liquid crystal molecules **262**. In the following description, this component may also be referred to as a pretilt-angle-exhibiting component. By irradiating the first or second alignment film **110** or **120** with light from a direction which is oblique to the normal direction of its principal face, an alignment regulating force is applied to the polyimide **112**, **122** such that the liquid crystal molecules **262** are aligned so as to be inclined from the normal directions of the principal faces of the first and second alignment films **110** and **120** in the absence of an applied voltage. Such a treatment is also referred to as a photo-alignment treatment. Since a photo-alignment treatment is performed without involving any contact, static electricity will not occur due to friction as in a rubbing treatment, and thus the production yield can be improved.

Moreover, the pretilt azimuth of the liquid crystal molecules **262** introduced by the first alignment film **110** is different from the pretilt azimuth of the liquid crystal molecules **262** introduced by the second alignment film **120**. For example, the pretilt azimuth of the liquid crystal molecules **262** introduced by the first alignment film **110** intersects, at 90°, the pretilt azimuth of the liquid crystal molecules **262** introduced by the second alignment film **120**. Herein, the liquid crystal layer **260** does not include any chiral agent, so that, when a voltage is applied across the liquid crystal layer **260**, the liquid crystal molecules **262** within the liquid crystal layer **260** take a twist alignment in accordance with the alignment regulating forces from the first and second alignment films **110** and **120**. However, a chiral agent may be added to the liquid crystal layer **260** as necessary. In combination with polarizers which are placed in crossed Nicols, the liquid crystal layer **260** performs displaying in a normally black mode.

Moreover, each of the first and second alignment films **110** and **120** may have a plurality of alignment regions for each pixel. For example, a portion of the first alignment film **110** may be masked, and after a predetermined region of the first alignment film **110** is irradiated with light from a certain direction, another region which was not irradiated with light may be irradiated with light from a different direction. Furthermore, a similar photo-alignment treatment is performed also for the second alignment film **120**. In this manner, regions that confer different alignment regulating forces can be formed in each of the first and second alignment films **110** and **120**.

Since the polyvinyl compound **114**, **124** of the first and second alignment films **110** and **120** contains a polymerization product resulting from polymerization of a polyfunctional monomer having a plurality of vinyl groups, the first and second alignment films **110** and **120** are structurally stabilized, whereby changes in the alignment function are suppressed, and the pretilt angle of the liquid crystal molecules **262** in the liquid crystal layer **260** is maintained. Note that, if the polyvinyl compound contained in the alignment films were a polymerization product resulting from polymerization of a monofunctional monomer, changes in the alignment function would not be adequately suppressed because the polymerization product to be formed in this case, i.e., a long linear polymer, is likely to be deformed. Moreover, since the alignment films **110** and **120** contain the polyvinyl compound **114**, **124**, which contains the polyimide **112**, **122** and a polymerization product of a polyfunctional monomer, thermal resistance, solvent resistance, hygroscopicity, and other characteristics of the alignment films **110** and **120** are substantially non-inferior to those of a commonly-used alignment film formed of polyimide.

Both of the polyimide **112** and the polyvinyl compound **114** are present in an internal region **110r** and a surface region **110s** of the first alignment film **110**. Moreover, both of the polyimide **122** and the polyvinyl compound **124** are present in an internal region **120r** and a surface region **120s** of the second alignment film **120**. However, the concentration of the polyvinyl compound **114**, **124** in the surface region **110s** and **120s** of the first and second alignment films **110** and **120** is higher than that in the internal regions **110r** and **120r** of the first and second alignment films **110** and **120**. The concentration of the polyvinyl compound **114**, **124** is measured by, for example, time of flight-secondary ion mass spectrometry (TOF-SIMS) or X-ray photoelectron spectroscopy (XPS). In the case of XPS, for example, an apparatus manufactured by ULVAC-PHI, INCORPORATED may be used to analyze the atoms in the depth direction while etching with C60.

As a technique of suppressing image sticking caused by changes in the pretilt angle, Polymer Sustained Alignment Technology (hereinafter referred to as "PSA technique") is known. In the PSA technique, the pretilt direction of the liquid crystal molecules is controlled by a polymerization product that is generated by irradiating the polymerizable compound with an active energy ray (e.g., ultraviolet light) while applying a voltage across a liquid crystal layer in which a small amount of polymerizable compound (e.g., a photopolymerizable monomer) is mixed.

Now, differences between an alignment sustaining layer which is formed by a generic PSA technique and the polyvinyl compound **114**, **124** in the alignment films **110** and **120** of the liquid crystal display device **200** of the present embodiment will be described.

In the PSA technique, the alignment sustaining layer exists on the alignment film, and when the liquid crystal panel is disassembled to analyze the surface of the active matrix substrate or the counter substrate by TOF-SIMS or XPS, ions or atoms derived from the polymerization product component will be detected at the outermost surface of the substrate. On the other hand, in the display device **200** of the present embodiment, the polyvinyl compound **114**, **124** is contained in the alignment films **110** and **120**, and when the liquid crystal panel is disassembled to similarly analyze the surface of the active matrix substrate **220** or the counter substrate **240**, not only ions or atoms derived from the polyvinyl compound **114**, **124** but also ions or atoms derived from the polyimide **112**, **122** component will be detected, indicative that the polyimide **112** and the polyvinyl compound **114** are present at the surface of the active matrix substrate **220**, and also that the polyimide **122** and the polyvinyl compound **124** are present at the surface of the counter substrate **240**.

Moreover, in the PSA technique, polymerization product is formed through light irradiation after producing a liquid crystal panel having an alignment film, whereas in the liquid crystal display device **200** of the present embodiment, the polyvinyl compound **114**, **124** is contained in the first and second alignment films **110** and **120**, and the polyvinyl compound 114, **124** is formed before the active matrix substrate **220** and the counter substrate **240** are attached together. Therefore, even if the active matrix substrate **220** and the counter substrate **240** is to be attached together in a different place from the place where the active matrix substrate **220** and the counter substrate **240** were produced, there is no need to effect polymer formation at the place where they are attached together, thus facilitating the production of the liquid crystal display device **200**.

In the liquid crystal display device **200** of the present embodiment, as described above, the alignment films **110** and **120** contain the polyvinyl compound **114**, **124**, which fixes the pretilt direction of the liquid crystal molecules **262**. This is presumably because the polyvinyl compound **114**, **124** suppresses deformation of the pretilt-angle-exhibiting component, whereby the alignment direction of the liquid crystal molecules **262** introduced by the polyimide **112**, **122** is maintained in a direction which is essentially vertical to the principal faces of the alignment films **110** and **120**. Moreover, the polyvinyl compound **114**, **124** stabilizes the impurities and the like which have occurred due to damage during the alignment treatment, thus suppressing generation of impurity ions and occurrence of image sticking.

The polyimide **112**, **122** has, for example, a side chain which contains a cinnamate group as a photoreactive functional group, such that a dimerization site which is formed through light irradiation is provided on the side chain. Moreover, the side chain may contain a fluorine atom.
When the side chain of the polyimide **112**, **122** contains a fluorine atom, the aforementioned image sticking is suppressed to a certain extent.

For example, the main chain of the polyimide **112**, **122** is represented by the following structural formula.

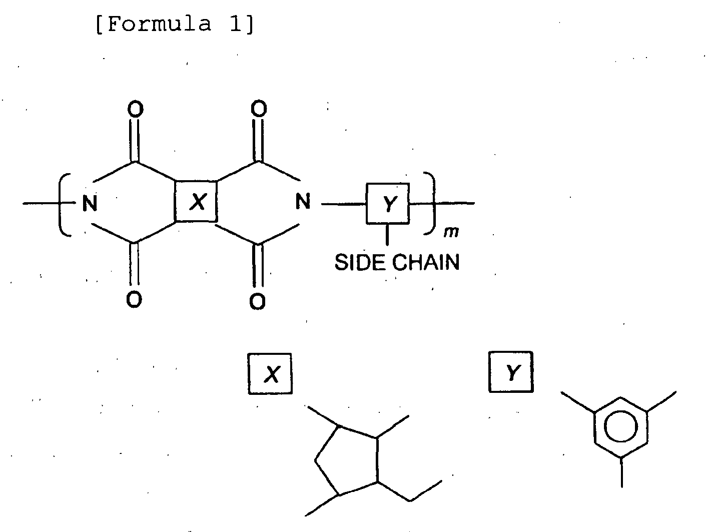

Moreover, the side chain of the polyimide **112**, **122** is generally represented by the following structural formula.

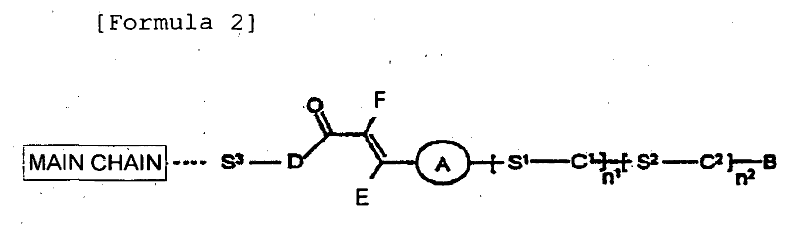

A represents pyrimidine-2,5-diyl, pyridine-2,5-diyl, 2,5-thiophenylene, 2,5-furanylene, 1,4-or 2,6-naphthylene, or phenylene, optionally substituted by a group selected from fluorine, chlorine, and cyano, or by a C₁₋₁₈ cyclic, linear, or branched alkyl residue (which is optionally substituted by one cyano group or one or more halogen atoms, where one or more non-adjacent -CH₂- groups of the alkyl are optionally replaced by a group Q).

B is a linear or branched alkyl residue which is unsubstituted, mono-substituted by cyano or halogen, or poly-substituted by halogen, having 3 to 18 carbon atoms (where one or more non-adjacent CH₂ groups may independently be replaced by a group Q).

C¹ and C² each independently of the other represent an aromatic or alicyclic group (which is unsubstituted or substituted by fluorine, chlorine, cyano, or by a cyclic, linear, or branched alkyl residue (which is unsubstituted, mono-substituted by cyano or halogen, or poly-substituted by halogen, having 1 to 18 carbon atoms and where one or more non-adjacent CH₂ groups may independently be replaced by a group Q)). D represents an oxygen atom or -NR¹- (where R¹ represents a hydrogen atom or lower alkyl).

Moreover, S¹ and S² each independently of the other represent a single covalent bond or a spacer unit. S³ represents a spacer unit.

Q represents a group selected from -O-, -CO-, -COO-, -O-CO-, -Si(CH₃)2-O-Si(CH₃)₂-, -NR¹-, -NR¹-CO-, -CO-NR¹-, - NR¹-CO-O-, -O-CO-NR¹-, -NR¹-CO-NR¹-, -CH=CH-, -C≡C-, and -O-CO-O-(where R¹ represents a hydrogen atom or lower alkyl). E and F each independently of the other represent hydrogen, fluorine, chlorine, cyano, alkyl optionally substituted by fluorine having carbon atoms 1 to 12 (where optionally one or more non-adjacent CH₂ groups are replaced by -O-, -CO-O-, -O-CO- and/or -CH=CH-).

Herein, it is preferable that A includes an aromatic compound; B includes fluorocarbon; D includes at least one or more hydrocarbon groups; and E and F include hydrogen atoms.

More specifically, the side chain of the polyimide **112**, **122** is represented by the following structural formula.

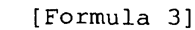

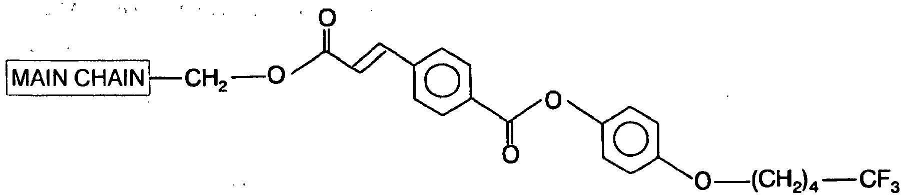

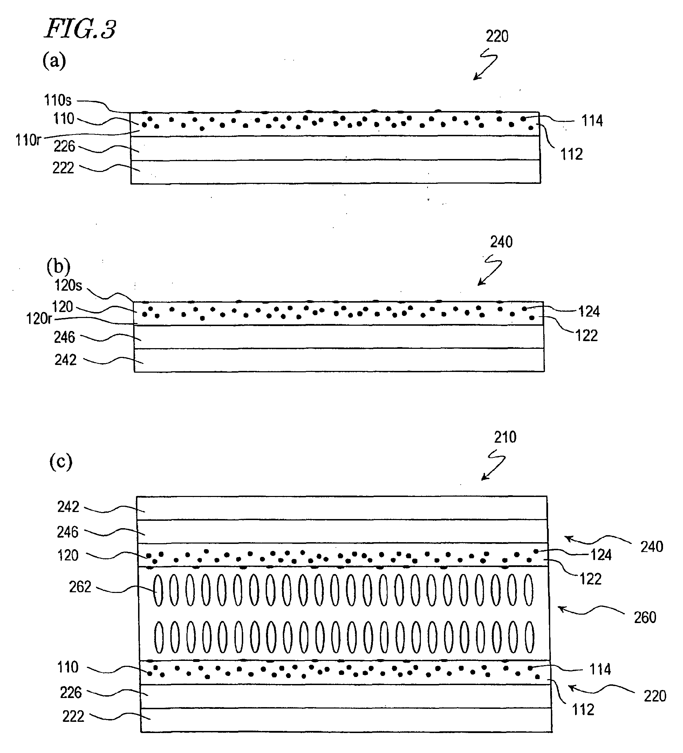

Hereinafter, with reference to FIG. **3**, a production method for the liquid crystal display device **200** will be described.

First, as shown in FIG. **3(a)**, the pixel electrodes **226** are formed on the first transparent substrate **222**. Although not shown in FIG. **3(a)**, TFTs and wiring lines and the like that are connected thereto are provided between the first transparent substrate **222** and the pixel electrodes **226**.

Moreover, an alignment film material containing a mixture of a polyimide precursor and a polyfunctional monomer is prepared. The alignment film material is formed by dissolving a polyfunctional monomer in a solvent in which a polyimide precursor is dissolved. The polyfunctional monomer is polymerized upon application of heat or light, thus forming a polymerization product. The polyfunctional monomer has two or more directly-bonded ring structures or one or more condensed ring structures, for example. As the monomer, at least either one of a methacrylate-type monomer and an acrylate-type monomer is used. Moreover, the solvent contains γ -butyrolactone and N-methylpyrrolidone (NMP), for example. The concentration of the polyfunctional monomer on the basis of the alignment film material is no less than 2wt% and no more than 50wt%, for example.

This alignment film material is obtained by, for example, after allowing a polyimide precursor (polyamic acid) having a polyamic acid (PAA) type main chain and a side chain which contains a cinnamate group to be dissolved in a solvent, adding biphenyldimethacrylate as the polyfunctional monomer. The structural formula of the main chain of polyamic acid is shown below.

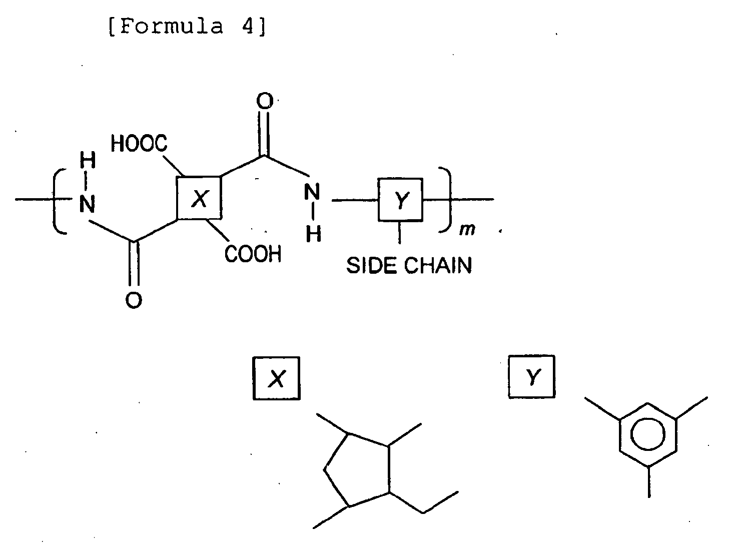

Next, an alignment film material is applied (provided) on the pixel electrodes **226**, and a heat treatment is conducted to form the first alignment film **110**. As the heat treatment, for example, two heat treatments may be performed at different temperatures. Specifically, after performing a first heat treatment, a second heat treatment is performed at a higher temperature than that of the first heat treatment. The first heat treatment removes most of the solvent so that the alignment film is formed, and the second heat treatment stabilizes the alignment film. The first heat treatment is also referred to as a pre-sinter, and the second heat treatment a full sinter. Through the heat treatment, the polyamic acid is imidized, whereby the polyimide **112** is formed. Also through the heat treatment, the polyfunctional monomer is polymerized, whereby the polyvinyl compound **114** is formed. The first alignment film **110** is formed in this manner. The polyvinyl compound **114** is present in the surface region **110s** and the internal region **110r** of the first alignment film **110**. Herein, the polyimide **112** is also present in the surface region **110s** and the internal region **110r** of the first alignment film **110**.

Next, the first alignment film **110** is subjected to an alignment treatment. The alignment treatment may be performed after the first heat treatment, or after the second heat treatment. For example, the alignment treatment is performed by irradiating the first alignment film **110** with light. For example, light of wavelengths in the range of no less than 250 nm and no more than 400 nm is radiated onto the first alignment film **110** at an irradiation dose of no less than 20 mJ/cm² and no more than 200 mJ/cm², from a direction which is inclined from the normal direction of the principal face of the first alignment film **110**. If the irradiation dose increases from 200 mJ/cm², the alignment film may deteriorate so that the voltage holding ratio and the like may be lowered. Moreover, the irradiation angle of light may be in the range of no less than 5° and no more than 85°, and preferably no less than 40° and no more than 60°, from the normal direction of the principal face of the first alignment film **110**. Note that, when the irradiation angle is small, it becomes difficult to confer a pretilt angle; when the irradiation angle is too large, it takes more time to confer the same pretilt angle. Moreover, light may be unpolarized light, linearly polarized light, elliptically polarized light, or circularly polarized light. However, linearly polarized light is to be used in the case where a cinnamate group is used as the photoreactive functional group.

As shown in FIG. **3(b)**, the counter electrode **246** is formed on the second transparent substrate **242**. Moreover, an alignment film material is provided. This alignment film material may be similar to that of the first alignment film **110**.

Next, the alignment film material is applied on the counter electrode **246**, and subjected to a heat treatment, thereby forming the second alignment film **120**. As the heat treatment, for example, two heat treatments may be performed at different temperatures. The heat treatment evaporates the solvent so that the polyimide **122** is formed, and polymerizes the polyfunctional monomer so that the polyvinyl compound **124** is formed. Next, the second alignment film **120** formed in this manner is subjected to an alignment treatment. The alignment treatment is performed in a similar manner to the first alignment film **110**.

Next, as shown in FIG. **3(c)**, the active matrix substrate **220** and the counter substrate **240** are placed so that the first alignment film **110** and the second alignment film **120** oppose each other. In the present specification, before formation of the liquid crystal layer, the active matrix substrate and the counter substrate attached together will be referred to as a "vacant panel".

Next, a liquid crystal material is provided, and the liquid crystal material is introduced between the first alignment film **110** and the second alignment film **120** of the vacant panel, thus forming the liquid crystal layer **260**. As described above, the first and second alignment films **110** and **120** have been subjected to an alignment treatment, and thus the liquid crystal molecules **262** are aligned so as to be inclined from the normal directions of the principal faces of the first and second alignment films **110** and **120** even in the absence of an applied voltage. Moreover, the polyvinyl compound **114**, **124** maintains the alignment of the liquid crystal molecules **262**, whereby image sticking caused by changes in the pretilt angle is suppressed. The liquid crystal panel **210** is produced in this manner. Thereafter, the driving circuit **212** and the control circuit **214** shown in FIG. **2(a)** are mounted on the liquid crystal panel **210**, whereby the liquid crystal display device **200** is produced.

In the aforementioned PSA technique, a polymerization product is formed under an applied voltage. In the case where ultraviolet for polymer formation purposes is radiated while thus applying a voltage, a complex fabrication apparatus is required in which a device for applying a voltage across the liquid crystal panel and a device for radiating ultraviolet light are integrated. Moreover, since ultraviolet light irradiation is performed after a voltage is applied across the liquid crystal panel for a long time for obtaining a predetermined alignment, this fabrication apparatus needs to be used for a long time. Moreover, when forming the liquid crystal layer of a liquid crystal panel through dropwise application of a liquid crystal material, generally speaking, a plurality of liquid crystal panels are simultaneously produced by using a large-sized mother glass substrate, and thereafter each liquid crystal panel is cut out from the large-sized mother glass substrate. In this case of simultaneously producing a plurality of liquid crystal panels, a design must be adopted such that special wiring lines are formed on the mother glass substrate for allowing a voltage to be simultaneously applied to the plurality of liquid crystal panels.

Moreover, in the case where a liquid crystal panel of a particularly large size is to be produced, it is difficult to uniformly apply a voltage across the liquid crystal layer in the respective pixels. If ultraviolet light irradiation is performed with non-uniform voltages being applied, there will be fluctuations in the pretilt angle.

Moreover, in the case of applying a voltage during polymer formation, ribs, slits, or rivets need to be provided on the pixel electrode and the counter electrode for improved viewing angle characteristics. This will result in an increased number of steps and a decrease in the effective aperture ratio.

On the other hand, in the production method of the present embodiment, no voltage is applied when forming the polyvinyl compound **114**, **124**. Therefore, the liquid crystal display device **200** can be easily produced without using a complex fabrication apparatus. Moreover, a liquid crystal panel can be easily produced even when producing the liquid crystal layer **260** through dropwise application of a liquid crystal material. Moreover, since it is not necessary to apply a voltage across the liquid crystal layer **260** of all pixels when forming the polyvinyl compound **114**, **124**, fluctuations in the pretilt angle among liquid crystal molecules **262** can be suppressed. Furthermore, the viewing angle can be improved without providing ribs, slits, or rivets on the pixel electrodes **226** and the counter electrode **246**, thus reducing an increase in the number of steps.

Note that slits, ribs, and/or rivets may be provided on the pixel electrodes **226** and the counter electrode **246**. Alternatively, slits, ribs, and/or rivets may not be provided on the pixel electrodes **226** and the counter electrode **246**, and the liquid crystal molecules **262** may be aligned in accordance with an oblique electric field which is created by a highly-symmetrical pixel electrode **226** and the counter electrode **246**. As a result, the alignment regulating force of the liquid crystal molecules **262** under an applied voltage can be further increased.

Although the above description illustrates that the first and second alignment films **110** and **120** each contain the polyvinyl compound **114**, **124**, the present invention is not limited thereto. Only one of the first and second alignment films **110** and **120** may contain the corresponding polyvinyl compound **114**, **124**.

Although the above description illustrates that the active matrix substrate **220** and the counter substrate **240** respectively include the first and second alignment films **110** and **120**, the present invention is not limited thereto. One of the active matrix substrate **220** and the counter substrate **240** may include the corresponding first or second alignment film **110** or **120**.

Although the above description illustrates that polyvinyl compound **114**, **124** is formed through a heat treatment, the present invention is not limited thereto. The polyvinyl compound **114**, **124** may be formed through light irradiation. For example, in such light irradiation, a light source which mainly emits ultraviolet light (i-line) with a wavelength of 365 nm is suitably used. The irradiation time is 500 seconds, for example, and the irradiation intensity of light is 20 mW/cm². In the case where polymerization is effected through light irradiation, the polyfunctional monomer will sufficiently polymerize even if the irradiation intensity of light is 10 mW/cm² or less. The wavelength of light is preferably in the range of no less than 250 nm and no more than 400 nm, and more preferably in the range of no less than 300 nm and no more than 400 nm. However, polymerization will sufficiently occur with light of a wavelength greater than 400 nm. Although polymerization can occur with light of a wavelength of 300 nm or less, the irradiation dose should preferably be as small as possible because decomposition of organic matter will occur with irradiation of deep-ultraviolet with wavelengths near 200 nm.

Although the above description illustrates that a photo-alignment treatment is performed as the alignment treatment, the present invention is not limited thereto. A rubbing treatment may be performed as the alignment treatment.

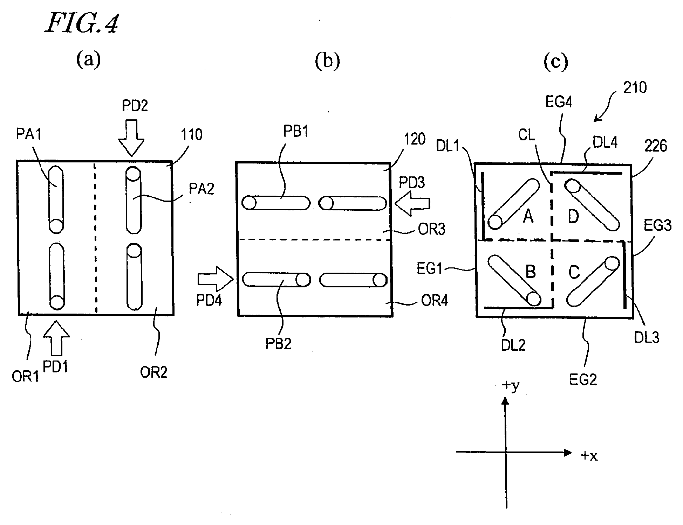

Moreover, the liquid crystal display device **200** may be of the 4D-RTN (4 Domain-Reverse Twisted Nematic) mode. Hereinafter, a liquid crystal display device of the 4D-RTN mode will be described with reference to FIG. **4**.

FIG. **4(a)** shows pretilt directions **PA1** and **PA2** of liquid crystal molecules defined on the alignment film **110** of the active matrix substrate **220**, and FIG. **4(b)** shows pretilt directions **PB1** and **PB2** of liquid crystal molecules defined on the alignment film **120** of the counter substrate **240**. FIG. **4(c)** shows alignment directions of liquid crystal molecules in the centers of liquid crystal domains **A** to **D** under an applied voltage, and regions (domain lines) **DL1** to **DL4** appearing dark due to alignment disorder. Note that the domain lines **DL1** to **DL4** are not so-called disclination lines.

FIG. **4(a)** to FIG. **4(c)** schematically show alignment directions of liquid crystal molecules as seen from the viewer side. FIG. **4(a)** to FIG. **4(c)** indicate that the end portions (essentially circular portions) of the cylindrical liquid crystal molecules are tilted toward the viewer.

As shown in FIG. **4(a)**, the first alignment film **110** includes a first alignment region **OR1** and a second alignment region **OR2**. The liquid crystal molecules regulated by the first alignment region **OR1** are tilted in the -y direction from the normal direction of the principal face of the first alignment film **110**, whereas the liquid crystal molecules regulated by the second alignment region **OR2** of the first alignment film **110** are tilted in the +y direction from the normal direction of the principal face of the first alignment film **110**. Moreover, the boundary between the first alignment region **OR1** and the second alignment region **OR2** extends in the column direction (y direction), and located in the substantial center along the row direction (x direction) of pixels. Thus, first and second alignment regions **OR1** and **OR2** of different pretilt azimuths are provided on the first alignment film **110**.

Moreover, as shown in FIG. **4(b)**, the second alignment film **120** includes a third alignment region **OR3** and a fourth alignment region **OR4**. The liquid crystal molecules regulated by the third alignment region **OR3** are tilted in the +x direction from the normal direction of the principal face of the second alignment film **120**, such that the -x direction end portions of these liquid crystal molecules are pointed toward the front face. The liquid crystal molecules regulated by the fourth alignment region **OR4** of the second alignment film **120** are tilted in the -x direction from the normal direction of the principal face of the second alignment film **120**, such that the +x direction end portions of these liquid crystal molecules are pointed toward the front face. Thus, the second alignment film **120** includes third and fourth alignment regions **OR3** and **OR4** with different pretilt azimuths.

An alignment treatment direction corresponds to an azimuth angle component obtained by projecting a direction, which extends toward an alignment region along the major axes of the liquid crystal molecules, onto that alignment region. The alignment treatment directions of the first, second, third, and fourth alignment regions are also referred to as first, second, third, and fourth alignment treatment directions.

The first alignment region **OR1** of the first alignment film **110** has been subjected to an alignment treatment along a first alignment treatment direction **PD1**, whereas the second alignment region **OR2** has been subjected to an alignment treatment along a second alignment treatment direction **PD2** which is different from the first alignment treatment direction **PD1**. The first alignment treatment direction **PD1** is essentially antiparallel to the second alignment treatment direction **PD2**. Moreover, the third alignment region **OR3** of the second alignment film **120** has been subjected to an alignment treatment along a third alignment treatment direction **PD3**, whereas the fourth alignment region **OR4** has been subjected to an alignment treatment along a fourth alignment treatment direction **PD4** which is different from the third alignment treatment direction **PD3**. The third alignment treatment direction **PD3** is essentially antiparallel to the fourth alignment treatment direction **PD4**.

As shown in FIG. **4(c)**, four liquid crystal domains **A**, **B**, **C**, and **D** are formed in the liquid crystal layer **260** of a pixel. In the liquid crystal layer **260**, a portion interposed between the first alignment region **OR1** of the first alignment film **110** and the third alignment region **OR3** of the second alignment film **120** defines the liquid crystal domain **A**; a portion interposed between the first alignment region **OR1** of the first alignment film **110** and the fourth alignment region **OR4** of the second alignment film **120** defines a liquid crystal domain **B**; a portion interposed between the second alignment region **OR2** of the first alignment film **110** and the fourth alignment region **OR4** of the second alignment film **120** defines a liquid crystal domain **C**; and a portion interposed between the second alignment region **OR2** of the first alignment film **110** and the third alignment region **OR3** of the second alignment film **120** defines a liquid crystal domain D. Note that the angle constituted by the first or second alignment treatment direction **PD1** or **PD2** and the third or fourth alignment treatment direction **PD3** or **PD4** is essentially 90°, and the twist angle in each of the liquid crystal domains **A**, **B**, **C**, and **D** is essentially 90°.

The alignment direction of a liquid crystal molecule at the center of a liquid crystal domain **A** to **D** is an intermediate direction between the pretilt direction for liquid crystal molecules introduced by the first alignment film **110** and the pretilt direction for liquid crystal molecules introduced by the second alignment film **120**. In the present specification, the alignment direction of a liquid crystal molecule in the center of a liquid crystal domain is referred to as a reference alignment direction; and within the reference alignment direction, an azimuth angle component in a direction from the rear face toward the front face and along the major axis of the liquid crystal molecule (i.e., an azimuth angle component obtained by projecting the reference alignment direction onto the principal face of the first alignment film **110** or the second alignment film **120**) is referred to as a reference alignment azimuth. The reference alignment azimuth characterizes its corresponding liquid crystal domain, and exerts a predominant influence on the viewing angle characteristics of that liquid crystal domain. Now, by relying on the horizontal direction (right-left direction) of the display screen (plane of the figure) as a reference for the azimuthal direction, and defining the left turn as positive (i.e., if the display surface is compared to the face of a clock, counterclockwise is positive, the 3 o'clock direction being an azimuth angle of 0°), the reference alignment directions of the four liquid crystal domains **A** to **D** are set to be four directions such that the difference between any two directions is substantially equal to an integer multiple of 90°. Specifically, the reference alignment azimuths of the liquid crystal domains **A**, **B**, **C**, and D are, respectively, 225°, 315°, 45°, and 135°.

As shown in FIG. **4(c)**, the domain lines **DL1** to **DL4** are respectively formed in the liquid crystal domains **A**, **B, C,** and **D**. The domain line **DL1** is formed in parallel to a portion of an edge **EG1** of the pixel electrode **226,** whereas the domain line **DL2** is formed in parallel to a portion of an edge **EG2.** Moreover, the domain line **DL3** is formed in parallel to a portion of an edge **EG3** of the pixel electrode **226,** whereas the domain line **DL4** is formed in parallel to a portion of an edge **EG4.** Moreover, a disclination line CL indicated by a broken line is observed in a border region where each of the liquid crystal domains **A** to **D** adjoins another liquid crystal domain. The disclination lines **CL** are dark lines in the aforementioned central portion. The disclination lines **CL** and the domain lines **DL1** to **DL4** are continuous, thus resulting in dark lines of a reverse 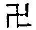 shape. Although the dark lines herein are in a reverse 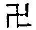 shape, the dark lines may be in an 8 shape.

Although the above-described liquid crystal display device is of the 4D-RTN mode, the present invention is not limited thereto. The liquid crystal display device may be of the CPA mode.

Hereinafter, alignment films and liquid crystal display devices of the present Examples will be described, in comparison with Comparative Examples and Reference Example.

### [Examples]

### (Example 1-1)

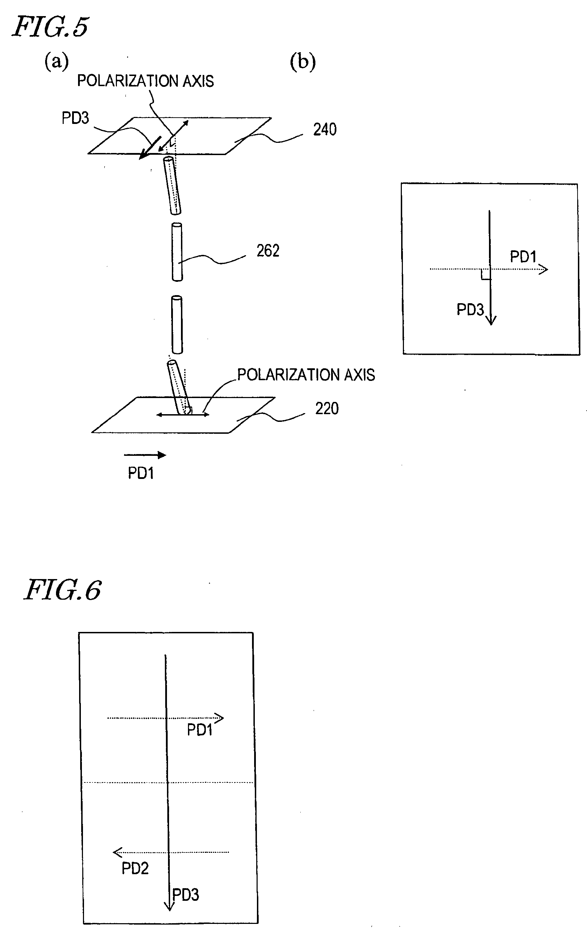

Hereinafter, with reference to FIG. **2** and FIG. **5**, an alignment film and a liquid crystal display device of Example 1-1 will be described. The liquid crystal display device of Example 1-1 is of the RTN mode.

First, on a principal face of the first transparent substrate **222,** although not shown in the figures, TFTs and wiring lines connected to the TFTs, and an insulating layer were formed, upon which the pixel electrodes **226** were formed. Similarly, on a principal face of the second transparent substrate **242,** although not shown in the figures, a colored layer having color filters, and an insulating layer were formed, upon which the counter electrode **246** was formed.

Next, a vertical-alignment type alignment film material was provided. The alignment film material was obtained by, after allowing a polyimide precursor (polyamic acid) having a side chain which contains a cinnamate group to be dissolved in a solvent, adding biphenyldimethacrylate as the polyfunctional monomer. The concentration of biphenyldimethacrylate on the basis of the alignment film material was 10wt%.

Next, the alignment film material was applied on the pixel electrodes **226,** and the solvent was removed to a certain extent through one minute of heating at 90°C as a first heat treatment (pre-sinter), further followed by 40 minutes of heating at 200°C as a second heat treatment (full sinter). Through such heat treatment, the polyamic acid was imidized, whereby the polyimide **112** was formed. Also through the heat treatment, biphenyldimethacrylate was polymerized, whereby the polyvinyl compound **114** was formed. In this manner, the first alignment film **110** was formed on the pixel electrodes **226.**

Thereafter, obliquely from a 40° direction with respect to the normal direction of a principal face of the first alignment film **110,** P-polarized light with a peak wavelength of 330 nm was radiated at 50 mJ/cm², thus performing a photo-alignment treatment. With such light irradiation, the cinnamate group underwent a dimerization reaction, whereby a dimerization site was formed. Similarly, the aforementioned alignment film material was applied to form the second alignment film **120** on the counter electrode **246,** and a photo-alignment treatment was performed.

Next, the active matrix substrate **220** and the counter substrate **240** were attached together so that the first alignment film **110** and the second alignment film **120** opposed each other and that the angle between the alignment treatment direction of the first alignment film **110** and the alignment treatment direction of the second alignment film **120** was 90°, and fixed so that the interspace between the active matrix substrate **220** and the counter substrate **240** was 4 µm.

Next, a nematic liquid crystal material having negative dielectric anisotropy was provided, which was introduced between the active matrix substrate **220** and the counter substrate **240.** The liquid crystal material had a dielectric anisotropy Δ ε of -3, and a birefringence Δn of 0.085.

FIG. **5(a)** shows an alignment state of the liquid crystal molecules **262** in the liquid crystal display device of Example 1-1. As shown in FIG. **5(b)**, the active matrix substrate **220** and the counter substrate **240** were attached together so that the angle between the alignment treatment direction **PD1** of the first alignment film **110** and the alignment treatment direction **PD3** of the second alignment film **120** was 90°, and the liquid crystal molecules **262** had a twist angle of 90°. Herein, the polarization axis of the polarizer on the active matrix substrate **220** was parallel to the alignment treatment direction of the first alignment film **110,** and the polarization axis of the polarizer on the counter substrate **240** was parallel to the alignment treatment direction of the second alignment film **120**. The liquid crystal molecules **262** had a pretilt angle of 88°. In this manner, a liquid crystal panel was produced.

Next, the resultant liquid crystal panel was subjected to a power-on test of continuously applying a voltage of 8 V for 50 hours at room temperature, which caused only 0.1° change in the pretilt angle. After finishing the power-on test, the voltage holding ratio was confirmed to be 99.5% or more, indicative that powering had been sufficiently conducted. A liquid crystal display device having such a liquid crystal panel suffered from almost no image sticking.

The liquid crystal display device of Example 1-1, in which ribs or slits were not provided as in the MVA mode, achieved a high aperture ratio. Since no voltage was applied at the time of polymerization, the liquid crystal display device of Example 1-1 was produced without employing a complex fabrication apparatus.

Although the above description illustrates that the photoreactive functional group causing a photodimerization reaction was a cinnamate group, similar effects were also obtained by using a tolan-type, a coumarin group, or a chalcone group as the photoreactive functional group. Although the above description illustrates that biphenyldimethacrylate was used as the polyfunctional monomer, similar effects were also obtained by using other methacrylates or acrylate-type monomers such as biphenyl diacrylate as the polyfunctional monomer.

### (Comparative Example 1)

Hereinafter, an alignment film and a liquid crystal display device of Comparative Example 1 will be described. The liquid crystal display device of Comparative Example 1 is of the RTN mode. The alignment film of Comparative Example 1 has a similar construction to that of the alignment film of Example 1-1 except that no polyvinyl compound (specifically, polymerization product of biphenyldimethacrylate) is contained.

First, on a principal face of the first transparent substrate, although not shown in the figures, TFTs and wiring lines connected to the TFTs, and an insulating layer were formed, upon which pixel electrodes were formed. Similarly, on a principal face of the second transparent substrate, although not shown in the figures, a colored layer having color filters, and an insulating layer were formed, upon which the counter electrode was formed.

Next, an alignment film material was provided. The alignment film material was obtained by allowing a polyimide precursor (polyamic acid) having a side chain which contains a cinnamate group to be dissolved in a solvent, but no polyfunctional monomer was mixed.

The alignment film material was applied on the pixel electrodes. Next, the solvent was removed to a certain extent through one minute of heating at 90°C as the first heat treatment, which was followed by 40 minutes of heating at 200°C as a second heat treatment. As a result, a first alignment film was formed on the pixel electrode. The polymerization product was not formed in this first alignment film.

Next, obliquely from a 40° direction with respect to the normal direction of a principal face of the first alignment film, P-polarized light with a peak wavelength of 330 nm was radiated at 50 mJ/cm², thus performing a photo-alignment treatment. With such light irradiation, the cinnamate group underwent a dimerization reaction, whereby a dimerization site was formed. Similarly, the aforementioned alignment film material was applied to form a second alignment film on the counter electrode, and a photo-alignment treatment was performed.

Next, the active matrix substrate and the counter substrate were attached together so that the first alignment film and the second alignment film opposed each other and that the angle between the alignment treatment direction of the first alignment film and the alignment treatment direction of the second alignment film was 90°, and fixed so that the interspace between the active matrix substrate and the counter substrate was 4 µm.

Next, a nematic liquid crystal material having negative dielectric anisotropy was provided, which was introduced between the active matrix substrate and the counter substrate. The liquid crystal material had a dielectric anisotropy Δε of -3, and a birefringence Δn of 0.085. At this point, the liquid crystal molecules were aligned in a manner similar to what was described above with reference to FIG. **5**, and the liquid crystal molecules **262** had a pretilt angle of 88°. In this manner, a liquid crystal panel was produced.

Next, the resultant liquid crystal panel was subjected to a power-on test of continuously applying a voltage of 8 V for 50 hours at room temperature, as a result of which the pretilt angle decreased by 0.15°. This is presumably because, since the alignment film did not contain the polymerization product, the side chains of the polyimide in the alignment film had flexibility and were susceptible to the action of the liquid crystal molecules, so that the tilt of the side chains of the alignment film changed due to the action of the tilted liquid crystal molecules while powering was conducted. After finishing the power-on test, the voltage holding ratio was confirmed to be 99.5% or more, indicative that powering had been sufficiently conducted. A liquid crystal display device having such a liquid crystal panel suffered from severe image sticking.

### (Reference Example)

In Example 1-1, biphenyldimethacrylate was used as the polyfunctional monomer; in Reference Example, another monomer was used instead of biphenyldimethacrylate. However, a liquid crystal display device was produced similarly to Example 1-1 except for changing the polyfunctional monomer.

As the monomer herein, a diacrylate was added which includes a trimethylene chain between a ring structure and a polymerizable functional group, and which is represented by the following rational formula. The molecular weight of this molecule was larger than that of biphenyldimethacrylate.

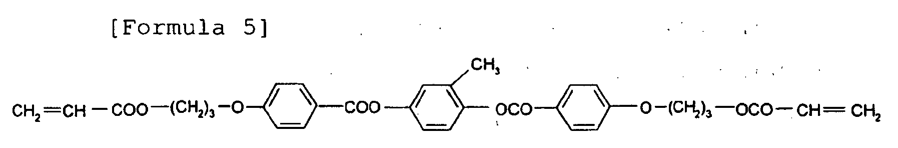

As another monomer, a diacrylate was added which includes a hexamethylene chain between a ring structure and a polymerizable functional group, and which is represented by the following rational formula.

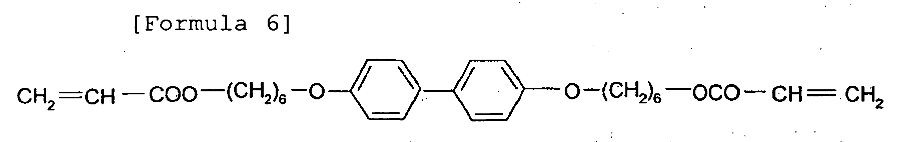

A liquid crystal panel that was produced in a similar manner to Example 1-1 was subjected to a similar power-on test, which revealed that the pretilt angle decreased by 0.15°. As discussed above with respect to Comparative Example 1, this amount of change is similar to that of the case where no monomer was added to the alignment film material. Thus, depending on the monomer added, the polymerization product was not formed in the alignment film, and thus the pretilt angle was not stabilized.

### (Example 1-2)

Hereinafter, with reference to FIG. **2** and FIG. **5****,** an alignment film and a liquid crystal display device of Example 1-2 will be described. The liquid crystal display device of Example 1-2 is of the RTN mode.

First, on a principal face of the first transparent substrate **222,** although not shown in the figures, TFTs and wiring lines connected to the TFTs, and an insulating layer were formed, upon which the pixel electrodes **226** were formed. Similarly, on a principal face of the second transparent substrate **242,** although not shown in the figures, a colored layer having color filters, and an insulating layer were formed, upon which the counter electrode **246** was formed.

A vertical-alignment type alignment film material was provided. The alignment film material was obtained by, after allowing a polyimide precursor (polyamic acid) having a side chain which contains a cinnamate group to be dissolved in a solvent, adding biphenyldimethacrylate. The concentration of biphenyldimethacrylate on the basis of the alignment film material was 10wt%.

The alignment film material was applied on the pixel electrodes **226,** and the solvent was removed to a certain extent through one minute of heating at 90°C, whereby the first alignment film **110** containing polyimide **112** was formed. Thereafter, obliquely from a 40° direction with respect to the normal direction of a principal face of the first alignment film **110,** P-polarized light with a peak wavelength of 330 nm was radiated at 50 mJ/cm², thus performing a photo-alignment treatment. With such light irradiation, the cinnamate group underwent a dimerization reaction, whereby a dimerization site was formed. Next, heating was conducted for 40 minutes at 150°C. The biphenyldimethacrylate was polymerized as a result of this, whereby the polyvinyl compound **114** was formed. Similarly to the first alignment film **110,** the second alignment film **120** was formed on the counter electrode **246,** and a photo-alignment treatment was performed.

Next, the active matrix substrate **220** and the counter substrate **240** were attached together so that the first alignment film **110** and the second alignment film **120** opposed each other and that the angle between the alignment treatment direction **PD1** of the first alignment film **110** and the alignment treatment direction **PD3** of the second alignment film **120** was 90°, and fixed so that the interspace between the active matrix substrate **220** and the counter substrate **240** was 4 µm.

Next, a nematic liquid crystal material having negative dielectric anisotropy was provided, which was introduced between the active matrix substrate **220** and the counter substrate **240.** The liquid crystal material had a dielectric anisotropy Δ ε of -3, and a birefringence Δ n of 0.085. At this point, the liquid crystal molecules **262** were aligned in a manner similar to what was described above with reference to FIG. **5****,** and the liquid crystal molecules **262** had a pretilt angle of 87.8°. In the case where the heating temperature after light irradiation was set to 200°C, the liquid crystal molecules **262** had a pretilt angle of 89.9°. In this manner, a liquid crystal panel was produced.

Next, the resultant liquid crystal panel was subjected to a power-on test of continuously applying a voltage of 8 V for 50 hours at room temperature, which caused only 0.1° change in the pretilt angle. After finishing the power-on test, the voltage holding ratio was confirmed to be 99.5% or more, indicative that powering had been sufficiently conducted. A liquid crystal display device having such a liquid crystal panel suffered from almost no image sticking.

The liquid crystal display device of Example 1-2, in which ribs or slits were not needed as in the MVA mode, achieved a high aperture ratio. Since no voltage was applied at the time of polymerization, the liquid crystal display device of Example 1-2 was produced without employing a complex fabrication apparatus.

Although the above description illustrates that the photoreactive functional group causing a photodimerization reaction was a cinnamate group, similar effects were also obtained by using a tolan-type, a coumarin group, or a chalcone group as the photoreactive functional group. Although the above description illustrates that biphenyldimethacrylate was used as the polyfunctional monomer, similar effects were also obtained by using other methacrylate-type monomers or acrylate-type monomers such as biphenyl diacrylate as the polyfunctional monomer.

### (Example 1-3)

Hereinafter, with reference to FIG. **2** and FIG. **5****,** an alignment film and a liquid crystal display device of Example 1-3 will be described. The liquid crystal display device of Example 1-3 is of the RTN mode.

First, on a principal face of the first transparent substrate **222,** although not shown in the figures, TFTs and wiring lines connected to the TFTs, and an insulating layer were formed, upon which the pixel electrodes **226** were formed. Similarly, on a principal face of the second transparent substrate **242,** although not shown in the figures, a colored layer having color filters, and an insulating layer were formed, upon which the counter electrode **246** was formed.

A vertical-alignment type alignment film material was provided. The alignment film material was obtained by allowing a polyimide precursor (polyamic acid) having a side chain which contains a cinnamate group to be dissolved in a solvent, and adding biphenyldimethacrylate. Herein, a plurality of alignment film materials were provided whose biphenyldimethacrylate concentrations were 5, 10, 20, 30, 40, and 50wt%, respectively, on the basis of the alignment film material.

The alignment film material was applied on the pixel electrodes **226,** and then the solvent was removed to a certain extent through one minute of heating at 90°C, then followed by 40 minutes of heating at 200°C. As a result, the first alignment film **110** containing the polyimide **112** and the polyvinyl compound **114** was formed.

Thereafter, obliquely from a 40° direction with respect to the normal direction of a principal face of the first alignment film **110,** P-polarized light with a peak wavelength of 330 nm was radiated at 50 mJ/cm², thus performing a photo-alignment treatment. With such light irradiation, the cinnamate group underwent a dimerization reaction, whereby a dimerization site was formed. Similarly to the first alignment film **110,** the second alignment film **120** was formed on the counter electrode **246,** and a photo-alignment treatment was performed.

Next, the active matrix substrate **220** and the counter substrate **240** were attached together so that the first alignment film **110** and the second alignment film **120** opposed each other and that the angle between the alignment treatment direction **PD1** of the first alignment film **110** and the alignment treatment direction **PD3** of the second alignment film **120** was 90°, and fixed so that the interspace between the active matrix substrate **220** and the counter substrate **240** was 4 µm.

Next, a nematic liquid crystal material having negative dielectric anisotropy was provided, which was introduced between the active matrix substrate **220** and the counter substrate **240.** The liquid crystal material had a dielectric anisotropy Δ ε of -3, and a birefringence Δn of 0.085. At this point, the liquid crystal molecules were aligned in a manner similar to what was described above with reference to FIG. **5****,** and the liquid crystal molecules **262** had a pretilt angle of 88°. In this manner, a liquid crystal panel was produced.

Next, the resultant liquid crystal panel was subjected to a power-on test of continuously applying a voltage of 8 V for 50 hours at room temperature, which caused only 0.1° change in the pretilt angle. After finishing the power-on test, the voltage holding ratio was confirmed to be 99.5% or more, indicative that powering had been sufficiently conducted. A liquid crystal display device having such a liquid crystal panel suffered from almost no image sticking.

Although the above description illustrates that the photoreactive functional group causing a photodimerization reaction was a cinnamate group, similar effects were also obtained by using a tolan-type, a coumarin group, or a chalcone group as the photoreactive functional group. Although the above description illustrates that biphenyldimethacrylate was used as the polyfunctional monomer, similar effects were also obtained by using other methacrylate-type monomers or acrylate-type monomers such as biphenyl diacrylate as the polyfunctional monomer.

Moreover, the effect of stabilizing the pretilt angle was obtained even when the concentration of biphenyldimethacrylate on the basis of the alignment film material was 50wt%. However, a biphenyldimethacrylate concentration of 40wt% or more resulted in a slightly whitish appearance, and thus such a concentration is considered to be too high. Therefore, the biphenyldimethacrylate concentration is preferably less than 40wt%. The whitishness was significant when the biphenyldimethacrylate concentration was 50wt%, and any higher concentration resulted in an observation of a decreased contrast due to scatter. This is presumably because dispersion of biphenyldimethacrylate becomes nonhomogeneous when the biphenyldimethacrylate concentration becomes high.

### (Example 2)

Hereinafter, with reference to FIG. **2** and FIG. **5**, an alignment film and a liquid crystal display device of Example 2 will be described. The liquid crystal display device of Example 2 is of the RTN mode.

First, on a principal face of the first transparent substrate **222,** although not shown in the figures, TFTs and wiring lines connected to the TFTs, and an insulating layer were formed, upon which the pixel electrodes **226** were formed. Similarly, on a principal face of the second transparent substrate **242,** although not shown in the figures, a colored layer having color filters, and an insulating layer were formed, upon which the counter electrode **246** was formed.

A vertical-alignment type alignment film material was provided. The alignment film material was obtained by allowing a polyimide precursor (polyamic acid) to be dissolved in a solvent, and thereafter adding biphenyldimethacrylate. The concentration of biphenyldimethacrylate on the basis of the alignment film material was 10wt%.

The alignment film material was applied on the pixel electrodes **226,** and the solvent was removed to a certain extent through one minute of heating at 90°C, further followed by 40 minutes of heating at 200°C. As a result, the polyimide **112** was formed, and biphenyldimethacrylate was polymerized to form the polyvinyl compound **114**. In this manner, the first alignment film **110** was formed on the pixel electrodes **226.** Thereafter, the first alignment film **110** was subjected to a rubbing treatment. Similarly to the first alignment film **110,** the second alignment film **120** was formed on the counter electrode **246,** and subjected to a rubbing treatment.

Next, the active matrix substrate **220** and the counter substrate **240** were attached together so that the first alignment film **110** and the second alignment film **120** opposed each other and that the angle between the alignment treatment direction **PD1** of the first alignment film **110** and the alignment treatment direction **PD3** of the second alignment film **120** was 90°, and fixed so that the interspace between the active matrix substrate **220** and the counter substrate **240** was 4 µm.

Next, a nematic liquid crystal material having negative dielectric anisotropy was provided, which was introduced between the active matrix substrate **220** and the counter substrate **240**. The liquid crystal material had a dielectric anisotropy Δ ε of -3, and a birefringence Δ n of 0.085. At this point, the liquid crystal molecules were aligned in a manner similar to what was described above with reference to FIG. **5****,** and the liquid crystal molecules **262** had a pretilt angle of 88°. In this manner, a liquid crystal panel was produced.

Next, the resultant liquid crystal panel was subjected to a power-on test of continuously applying a voltage of 8 V for 50 hours at room temperature, which caused only 0.1° change in the pretilt angle. After finishing the power-on test, the voltage holding ratio was confirmed to be 99.5% or more, indicative that powering had been sufficiently conducted. A liquid crystal display device having such a liquid crystal panel suffered from almost no image sticking.

The liquid crystal display device of Example 2, in which ribs or slits were not needed as in the MVA mode, achieved a high aperture ratio. Moreover, since no voltage was applied at the time of polymerization, the liquid crystal display device of Example 2 was produced without employing a complex fabrication apparatus.

### (Comparative Example 2)

An alignment film and a liquid crystal display device of Comparative Example 2 will be described. The liquid crystal display device of Comparative Example 2 is of the RTN mode. The alignment film of Comparative Example 2 has a similar construction to that of the alignment film of Example 2 except that no polyvinyl compound (specifically, polymerization product of biphenyldimethacrylate) is contained.

First, on a principal face of the first transparent substrate, although not shown in the figures, TFTs and wiring lines connected to the TFTs, and an insulating layer were formed, upon which pixel electrodes were formed. Similarly, on a principal face of the second transparent substrate, although not shown in the figures, a colored layer having color filters, and an insulating layer were formed, upon which the counter electrode was formed.

A vertical-alignment type alignment film material was provided. The alignment film material was obtained by allowing a polyimide precursor (polyamic acid) to be dissolved in a solvent. This alignment film material was applied on the pixel electrodes, and the solvent was removed to a certain extent through one minute of heating at 90°C, further followed by 40 minutes of heating at 200°C. As a result, a first alignment film was formed. However, the polymerization product was not formed in the first alignment film. Thereafter, the first alignment film was subjected to a rubbing treatment. Similarly to the first alignment film, a second alignment film was formed on the counter electrode, and was subjected to a rubbing treatment.

Next, the active matrix substrate and the counter substrate were attached together so that the first alignment film and the second alignment film opposed each other and that the angle between the alignment treatment direction of the first alignment film and the alignment treatment direction of the second alignment film was 90°, and fixed so that the interspace between the active matrix substrate and the counter substrate was 4 µm.

Next, a nematic liquid crystal material having negative dielectric anisotropy was provided, which was introduced between the active matrix substrate and the counter substrate. The liquid crystal material had a dielectric anisotropy Δε of -3, and a birefringence Δ n of 0.085. At this point, the liquid crystal molecules were aligned in a manner similar to what was described with reference to FIG. **5**, and the liquid crystal molecules had a pretilt angle of 88°. In this manner, a liquid crystal panel was produced.

Next, the resultant liquid crystal panel was subjected to a power-on test of continuously applying a voltage of 8 V for 50 hours at room temperature, as a result of which the pretilt angle decreased by 0.22°. This is presumably because the side chains of the polyimide in the alignment film had flexibility and were susceptible to the action of the liquid crystal molecules, so that the tilt of the side chains of the alignment film changed due to the action of the tilted liquid crystal molecules while powering was conducted. After finishing the power-on test, the voltage holding ratio was confirmed to be 99.5% or more, indicative that powering had been sufficiently conducted. A liquid crystal display device having such a liquid crystal panel suffered from severe image sticking.

### (Example 3)

With reference to FIG. **2** and FIG. **6**, an alignment film and a liquid crystal display device of Example 3 will be described. The liquid crystal display device of Example 3 is of the RTN mode.

First, on a principal face of the first transparent substrate **222,** although not shown in the figures, TFTs and wiring lines connected to the TFTs, and an insulating layer were formed, upon which the pixel electrodes **226** were formed. Similarly, on a principal face of the second transparent substrate **242,** although not shown in the figures, a colored layer having color filters, and an insulating layer were formed, upon which the counter electrode **246** was formed.

A vertical-alignment type alignment film material was provided. The alignment film material was obtained by, after allowing a polyimide precursor (polyamic acid) having a side chain which contains a cinnamate group to be dissolved in a solvent, mixing biphenyldimethacrylate. The concentration of biphenyldimethacrylate on the basis of the alignment film material was 10wt%.

The alignment film material was applied on the pixel electrodes **226,** and the solvent was removed to a certain extent through one minute of heating at 90°C, further followed by 40 minutes of heating at 200°C. As a result, the polyimide **112** was formed, and biphenyldimethacrylate was polymerized to form the polyvinyl compound **114**. In this manner, the first alignment film **110** was formed on the pixel electrodes **226.**

Thereafter, regions of the first alignment film **110** each corresponding to a half of a pixel were irradiated at 50 mJ/cm² with P-polarized light having a peak wavelength of 330 nm, at an azimuth angle of 0° and obliquely from a 40° direction with respect to the normal direction of a principal face of the first alignment film **110**. When the light irradiation was performed, the cinnamate group underwent a dimerization reaction, whereby a dimerization site was formed. Next, regions each corresponding to the other half of a pixel of the first alignment film **110** were irradiated at 50 mJ/cm² with P-polarized light having a peak wavelength of 330 nm, at an azimuth angle of 180° and obliquely from a 40° direction with respect to the normal direction of the principal face of the first alignment film **110**. Thus, photo-alignment treatments were performed to form regions with different alignment treatment directions.

Similarly, the aforementioned alignment film material was applied on the counter electrode **246,** and the solvent was removed to a certain extent through one minute of heating at 90°C, further followed by 40 minutes of heating at 200°C. The polyimide **122** was formed, and biphenyldimethacrylate was polymerized to form the polyvinyl compound **124**. In this manner, the second alignment film **120** was formed on the counter electrode **246**. Thereafter, each pixel of the second alignment film **120** was irradiated at 50 mJ/cm² with P-polarized light having a peak wavelength of 330 nm, obliquely from a 40° direction with respect to the normal direction of a principal face of the second alignment film **120**. Thus, a photo-alignment treatment was performed.

Next, the active matrix substrate **220** and the counter substrate **240** were attached together so that the first alignment film **110** and the second alignment film **120** opposed each other and that the angle between the alignment treatment direction of the first alignment film **110** and the alignment treatment direction of the second alignment film **120** was 90°, and fixed so that the interspace between the active matrix substrate **220** and the counter substrate **240** was 4 µm.

Next, a nematic liquid crystal material having negative dielectric anisotropy was provided, which was introduced between the active matrix substrate **220** and the counter substrate **240.** The liquid crystal material had a dielectric anisotropy Δε of -3, and a birefringence Δ n of 0.085.

FIG. **6** shows alignment treatment directions of the first and second alignment films **110** and **120** of Example 3. As described above, the active matrix substrate **220** and the counter substrate **240** were attached together so that the alignment treatment directions **PD1** and **PD2** of the first alignment film **110** and the alignment treatment direction **PD3** of the second alignment film **120** constituted angles of 90°, and the liquid crystal molecules **262** had a twist angle of 90°. At this point, the liquid crystal molecules **262** had a pretilt angle of 88°. In this manner, a liquid crystal panel realizing two-split alignments was produced.

Next, the resultant liquid crystal panel was subjected to a power-on test of continuously applying a voltage of 8 V for 50 hours at room temperature, which caused only 0.1° change in the pretilt angle. After finishing the power-on test, the voltage holding ratio was confirmed to be 99.5% or more, indicative that powering had been sufficiently conducted. A liquid crystal display device having such a liquid crystal panel suffered from almost no image sticking.

The liquid crystal display device of Example 3, in which ribs or slits were not needed as in the MVA mode, achieved a high aperture ratio. Moreover, since no voltage was applied at the time of polymerization, the liquid crystal display device of Example 3 was produced without employing a complex fabrication apparatus.

Although the above description illustrates that the photoreactive functional group causing a photodimerization reaction was a cinnamate group, similar effects were also obtained by using a tolan-type, a coumarin group, or a chalcone group as the photoreactive functional group. Although the above description illustrates that biphenyldimethacrylate was used as the polyfunctional monomer, similar effects were also obtained by using other methacrylate-type monomers or acrylate-type monomers such as biphenyl diacrylate as the polyfunctional monomer.

### (Example 4)

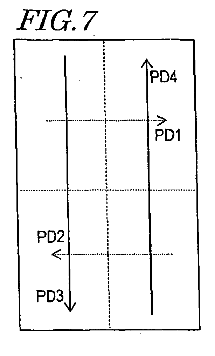

Hereinafter, with reference to FIG. **2** and FIG. **7****,** an alignment film and a liquid crystal display device of Example 4 will be described. The liquid crystal display device of Example 4 is of the 4D-RTN mode.

First, on a principal face of the first transparent substrate **222,** although not shown in the figures, TFTs and wiring lines connected to the TFTs, and an insulating layer were formed, upon which the pixel electrodes **226** were formed. Similarly, on a principal face of the second transparent substrate **242,** although not shown in the figures, a colored layer having color filters, and an insulating layer were formed, upon which the counter electrode **246** was formed.

A vertical-alignment type alignment film material was provided. The alignment film material was obtained by, after allowing a polyimide precursor (polyamic acid) having a side chain which contains a cinnamate group to be dissolved in a solvent, mixing biphenyldimethacrylate. The concentration of biphenyldimethacrylate on the basis of the alignment film material was 10wt%.

The alignment film material was applied on the pixel electrodes **226,** and the solvent was removed to a certain extent through one minute of heating at 90°C, further followed by 40 minutes of heating at 200°C. As a result, the polyimide **112** was formed, and biphenyldimethacrylate was polymerized to form the polyvinyl compound **114**. In this manner, the first alignment film **110** was formed on the pixel electrodes **226.**

Thereafter, regions of the first alignment film **110** each corresponding to a half of a pixel were 50 mJ/cm² irradiated with P-polarized light having a peak wavelength of 330 nm, at an azimuth angle of 0° and obliquely from a 40° direction with respect to the normal direction of a principal face of the first alignment film **110**. When the light irradiation was performed, the cinnamate group underwent a dimerization reaction, whereby a dimerization site was formed. Next, regions each corresponding to the other half of a pixel of the first alignment film **110** were irradiated at 50 mJ/cm² with P-polarized light having a peak wavelength of 330 nm, at an azimuth angle of 180° and obliquely from a 40° direction with respect to the normal direction of the principal face of the first alignment film **110**. Thus, photo-alignment treatments were performed to form regions with different alignment treatment directions.

Similarly to the first alignment film **110**, the aforementioned alignment film material was applied on the counter electrode **246**, and the solvent was removed to a certain extent through one minute of heating at 90°C, further followed by 40 minutes of heating at 200°C. As a result, The polyimide **122** was formed, and biphenyldimethacrylate was polymerized to form the polyvinyl compound **124**. In this manner, the second alignment film **120** was formed on the counter electrode **246.**

Thereafter, regions of the second alignment film **120** each corresponding to a half of a pixel were 50 mJ/cm² irradiated with P-polarized light having a peak wavelength of 330 nm, at an azimuth angle of 90° and obliquely from a 40° direction with respect to the normal direction of a principal face of the second alignment film **120**. When the light irradiation was performed, the cinnamate group underwent a dimerization reaction, whereby a dimerization site was formed. Next, regions of the second alignment film **120** each corresponding to the other half of a pixel were irradiated at 50 mJ/cm² with P-polarized light having a peak wavelength of 330 nm, at an azimuth angle of 270° and obliquely from a 40° direction with respect to the normal direction of the principal face of the second alignment film **120**. Thus, photo-alignment treatments were performed to form regions with different alignment treatment directions.

Next, the active matrix substrate **220** and the counter substrate **240** were attached together so that the first alignment film **110** and the second alignment film **120** opposed each other and that the angle between the alignment treatment direction of the first alignment film **110** and the alignment treatment direction of the second alignment film **120** was 90°, and fixed so that the interspace between the active matrix substrate **220** and the counter substrate **240** was 4 µm.

Next, a nematic liquid crystal material having negative dielectric anisotropy was provided, which was introduced between the active matrix substrate **220** and the counter substrate **240**. The liquid crystal material had a dielectric anisotropy Δ ε of -3, and a birefringence Δ n of 0.085.

FIG. **7** shows alignment treatment directions of the first and second alignment films **110** and **120** of Example 4. As described above, the active matrix substrate **220** and the counter substrate **240** were attached together so that the alignment treatment directions **PD1** and **PD2** of the first alignment film **110** and the alignment treatment directions **PD3** and **PD4** of the second alignment film **120** constituted angles of 90°, and the liquid crystal molecules **262** had a twist angle of 90°. At this point, the liquid crystal molecules **262** had a pretilt angle of 88°. In this manner, a liquid crystal panel realizing four-split alignments was produced.

Next, the resultant liquid crystal panel was subjected to a power-on test of continuously applying a voltage of 8 V for 50 hours at room temperature, which caused only 0.1° change in the pretilt angle. After finishing the power-on test, the voltage holding ratio was confirmed to be 99.5% or more, indicative that powering had been sufficiently conducted. A liquid crystal display device having such a liquid crystal panel suffered from almost no image sticking.

Although the above description illustrates that the photoreactive functional group causing a photodimerization reaction was a cinnamate group, similar effects were also obtained by using a tolan-type, a coumarin group, or a chalcone group as the photoreactive functional group. Although the above description illustrates that biphenyldimethacrylate was used as the polyfunctional monomer, similar effects were also obtained by using other methacrylate-type monomers or acrylate-type monomers such as biphenyl diacrylate as the polyfunctional monomer.

The liquid crystal display device of Example 4, in which ribs or slits were not needed as in the MVA mode, achieved a high aperture ratio. Moreover, since no voltage was applied at the time of polymerization, the liquid crystal display device of Example 4 was produced without employing a complex fabrication apparatus.

### INDUSTRIAL APPLICABILITY

An alignment film according to the present invention is able to suppress image sticking caused by changes in the pretilt angle. Moreover, a liquid crystal display device according to the present invention can be easily produced. For example, there is no need to form polymerization product after attaching an active matrix substrate and a counter substrate together, thus providing an increased degree of freedom in terms of production.

Support for the claims and further embodiments are defined in the following itemized list:
1. An alignment film comprising polyimide and a polyvinyl compound, wherein,
   the polyvinyl compound contains a polymerization product of a polyfunctional monomer having a plurality of vinyl groups; and
   the polyfunctional monomer is represented by general formula (1) P1-A1-(Z1-A2)n-P2 (in general formula (1), P1 and P2 are, independently, acrylate, methacrylate, acrylamide or methacrylamide; A1 and A2 represent, independently, 1,4-phenylene, 1,4-cyclohexane or 2,5-thiophene, or naphthalene-2,6-diyl, anthracene-2,7-diyl, anthracene-1,8-diyl, anthracene-2,6-diyl or anthracene-1,5-diyl; and Z1 is a -COO-group, a -OCO- group, a -O- group, a -CONH- group or a single bond, where n is 0 or 1), wherein both of the polyimide and the polyvinyl compound are present on a surface and in an interior thereof, and wherein the polyvinyl compound has a three-dimensional network structure.
2. The alignment film of item 1, wherein each of plurality of vinyl groups of the polyfunctional monomer is a part of a methacrylate group or an acrylate group.
3. The alignment film of item 1 or 2, wherein the polyfunctional monomer has two or more directly-bonded ring structures or one or more condensed ring structures between the plurality of vinyl groups.
4. The alignment film of item 3, wherein a concentration of the polyvinyl compound at the surface is higher than a concentration of the polyvinyl compound in the interior.
5. The alignment film of any of items 1 to 5, wherein the alignment film is a photo-alignment film.
6. The alignment film of item 6, wherein the polyimide has a side chain containing a photoreactive functional group.
7. The alignment film of item 7, wherein the photoreactive functional group includes a cinnamate group.
8. A liquid crystal display device comprising an active matrix substrate, a counter substrate, and a liquid crystal layer provided between the active matrix substrate and the counter substrate, wherein
   at least one of the active matrix substrate and the counter substrate comprises the alignment film of any of items 1 to 8.
9. The liquid crystal display device of item 9, wherein the alignment film regulates liquid crystal molecules in the liquid crystal layer so that the liquid crystal molecules are inclined with respect to a normal direction of a principal face of the alignment film in the absence of an applied voltage.
10. The liquid crystal display device of item 9 or 10, wherein,
   the liquid crystal display device has a plurality of pixels; and
   in each of the plurality of pixels, the liquid crystal layer has a plurality of liquid crystal domains having respectively different reference alignment azimuths.
11. The liquid crystal display device of item 11, wherein the plurality of liquid crystal domains are four liquid crystal domains.

### REFERENCE SIGNS LIST

- **100**: first alignment film
- **102**: polyimide
- **104**: polyvinyl compound
- **110**: first alignment film
- **112**: polyimide
- **114**: polyvinyl compound
- **120**: second alignment film
- **122**: polyimide
- **124**: polyvinyl compound
- **200**: liquid crystal display device
- **210**: liquid crystal panel
- **220**: active matrix substrate
- **222**: first transparent substrate
- **226**: pixel electrode
- **240**: counter substrate
- **242**: second transparent substrate
- **246**: counter electrode
- **260**: liquid crystal layer
- **262**: liquid crystal molecule

## Claims

1. An alignment film comprising polyimide and a polyvinyl compound, wherein,
the polyvinyl compound contains a polymerization product of a polyfunctional monomer having a plurality of vinyl groups; and
the polyfunctional monomer is represented by general formula (1) P1-A1-(Z1-A2)n-P2 (in general formula (1), P1 and P2 are, independently, acrylate, methacrylate, acrylamide or methacrylamide; A1 and A2 represent, independently, 1,4-phenylene, 1,4-cyclohexane or 2,5-thiophene, or naphthalene-2,6-diyl, anthracene-2,7-diyl, anthracene-1,8-diyl, anthracene-2,6-diyl or anthracene-1,5-diyl; and Z1 is a -COO- group, a -OCO- group, a -O- group, a -CONH- group or a single bond, where n is 0 or 1), wherein both of the polyimide and the polyvinyl compound are present on a surface and in an interior thereof, and wherein the polyvinyl compound has a three-dimensional network structure.

2. The alignment film of claim 1, wherein each of plurality of vinyl groups of the polyfunctional monomer is a part of a methacrylate group or an acrylate group.

3. The alignment film of claim 1 or 2, wherein the polyfunctional monomer has two or more directly-bonded ring structures or one or more condensed ring structures between the plurality of vinyl groups.

4. The alignment film of claim 1, wherein a concentration of the polyvinyl compound at the surface is higher than a concentration of the polyvinyl compound in the interior.

5. The alignment film of any of claims 1 to 4, wherein the alignment film is a photo-alignment film.

6. The alignment film of claim 5, wherein the polyimide has a side chain containing a photoreactive functional group.

7. The alignment film of claim 6, wherein the photoreactive functional group includes a cinnamate group.

8. A liquid crystal display device comprising an active matrix substrate, a counter substrate, and a liquid crystal layer provided between the active matrix substrate and the counter substrate, wherein
at least one of the active matrix substrate and the counter substrate comprises the alignment film of any of claims 1 to 7.

9. The liquid crystal display device of claim 8, wherein the alignment film regulates liquid crystal molecules in the liquid crystal layer so that the liquid crystal molecules are inclined with respect to a normal direction of a principal face of the alignment film in the absence of an applied voltage.

10. The liquid crystal display device of claim 8 or 9, wherein,
the liquid crystal display device has a plurality of pixels; and
in each of the plurality of pixels, the liquid crystal layer has a plurality of liquid crystal domains having respectively different reference alignment azimuths.

11. The liquid crystal display device of claim 10, wherein the plurality of liquid crystal domains are four liquid crystal domains.

## Patentansprüche

1. Orientierungsfilm, umfassend eine Polyimid- und Polyvinyl-Verbindung, wobei
die Polyvinyl-Verbindung ein Polymerisationsprodukt eines polyfunktionellen Monomers mit einer Vielzahl von Vinylgruppen enthält, und
das polyfunktionelle Monomer durch die allgemeine Formel (1) P1-A1-(Z1-A2)n-P2 dargestellt ist (in der allgemeinen Formel (1) sind P1 und P2 unabhängig Acrylat, Methacrylat, Acrylamid oder Methacrylamid, A1 und A2 stehen unabhängig voneinander für 1,4-Phenylen, 1,4-Cyclohexan oder 2,5-Thiophen oder Naphthalen-2,6-diyl, Anthracen-2,7-diyl, Anthracen-1,8-diyl, Anthracen-2,6-diyl oder Antracen-1,5-diyl, und Z1 ist eine -COO--Gruppe, eine -OCO--Gruppe, eine -O--Gruppe, eine -CONH--Gruppe oder eine Einfachbindung, wobei n 0 oder 1 ist), wobei beide der Polyimid- und der Polyvinyl-Verbindung auf einer Oberfläche und im Inneren davon vorliegen, und wobei die Polyvinylverbindung eine dreidimensionale Netzwerkstruktur aufweist.

2. Orientierungsfilm nach Anspruch 1, wobei jede der Vielzahl der Vinyl-Gruppen des polyfunktionellen Monomers ein Teil einer Methacrylat-Gruppe oder einer Acrylat-Gruppe ist.

3. Orientierungsfilm nach Anspruch 1 oder 2, wobei das polyfunktionelle Monomer zwei oder mehr direkt gebundene Ringstrukturen oder eine oder mehr kondensierte Ringstrukturen zwischen der Vielzahl der Vinyl-Gruppen aufweist.

4. Orientierungsfilm nach Anspruch 1, wobei eine Konzentration der Polyvinyl-Verbindung an der Oberfläche höher als eine Konzentration der Polyvinyl-Verbindung im Inneren ist.

5. Orientierungsfilm nach einem der Ansprüche 1 bis 4, wobei der Orientierungsfilm ein Foto-Orientierungsfilm ist.

6. Orientierungsfilm nach Anspruch 5, wobei das Polyimd eine Seitenkette aufweist, die eine fotoreaktive funktionelle Gruppe enthält.

7. Orientierungsfilm nach Anspruch 6, wobei die fotoreaktive funktionelle Gruppe eine Cinnamat-Gruppe umfasst.

8. Flüssigkristallanzeigenvorrichtung, umfassend ein Aktivmatrixsubstrat, ein Gegensubstrat und eine Flüssigkristallschicht, die zwischen dem Aktivmatrixsubstrat und dem Gegensubstrat angeordnet ist, wobei
mindestens eines des Aktivmatrixsubstrats oder des Gegensubstrats den Orientierungsfilm nach einem der Ansprüche 1 bis 7 umfasst.

9. Flüssigkristallanzeigenvorrichtung nach Anspruch 8, wobei der Orientierungsfilm Flüssigkristallmoleküle in der Flüssigkristallschicht reguliert, so dass die Flüssigkristallmoleküle hinsichtlich der normalen Richtung der Hauptoberfläche des Orientierungsfilms in Abwesenheit einer angelegten Spannung schräg angeordnet sind.

10. Flüssigkristallanzeigenvorrichtung nach Anspruch 8 oder 9, wobei
die Flüssigkristallanzeigenvorrichtung eine Vielzahl von Pixeln aufweist und
in jedem der Vielzahl von Pixeln die Flüssigkristallschicht eine Vielzahl von Flüssigkristalldomänen mit entsprechend verschiedenen Referenzorientierungsazimuthen aufweist.

11. Flüssigkristallanzeigenvorrichtung nach Anspruch 10, wobei die Vielzahl der Flüssigkristalldomänen vier Flüssigkristalldomänen sind.

## Revendications

1. Film d'alignement comprenant un polyimide et un composé polyvinylique, dans lequel
le composé polyvinylique contient un produit de polymérisation d'un monomère polyfonctionnel comportant une pluralité de groupes vinyle ; et
le monomère polyfonctionnel est représenté par la formule générale (1) P1-A1-(Z1-A2)n-P2 (dans la formule générale (1), P1 et P2 sont indépendamment des radicaux acrylate, méthacrylate, acrylamide ou méthacrylamide ; A1 et A2 représentent indépendamment des radicaux 1,4-phénylène, 1,4-cyclohexane ou 2,5-thiophène, ou naphtalène-2,6-diyle, anthracène-2,7-diyle, anthracène-1,8-diyle, anthracène-2,6-diyle ou anthracène-1,5-diyle ; et Z1 est un groupe -COO-, un groupe -OCO-, un groupe -O-, un groupe -CONH- ou une liaison simple, et n vaut 0 ou 1),
dans lequel tant le polyimide que le composé polyvinylique sont présents sur une surface et à l'intérieur de celui-ci, et dans lequel le composé polyvinylique présente une structure de réseau tridimensionnel.

2. Film d'alignement selon la revendication 1, dans lequel chacun parmi la pluralité de groupes vinyle du monomère polyfonctionnel constitue une partie d'un groupe méthacrylate ou d'un groupe acrylate.

3. Film d'alignement selon la revendication 1 ou 2, dans lequel le monomère polyfonctionnel comporte deux ou plus de deux structures cycliques liées directement ou une ou plusieurs structure(s) cyclique(s) condensée(s) entre la pluralité de groupes vinyle.

4. Film d'alignement selon la revendication 1, dans lequel la concentration du composé polyvinylique à la surface est supérieure à la concentration du composé polyvinylique à l'intérieur.

5. Film d'alignement selon l'une quelconque des revendications 1 à 4, lequel film d'alignement est un film de photoalignement.

6. Film d'alignement selon la revendication 5, dans lequel le polyimide comporte une chaîne latérale contenant un groupe fonctionnel photoréactif.

7. Film d'alignement selon la revendication 6, dans lequel le groupe fonctionnel photoréactif comprend un groupe cinnamate.

8. Dispositif d'affichage à cristaux liquides comprenant un substrat de matrice active, un contre-substrat, et une couche de cristaux liquides disposée entre le substrat de matrice active et le contre-substrat, dans lequel au moins l'un parmi le substrat de matrice active et le contre-substrat comprend le film d'alignement de l'une quelconque des revendications 1 à 7.

9. Dispositif d'affichage à cristaux liquides selon la revendication 8, dans lequel le film d'alignement régule les molécules de cristaux liquides dans la couche de cristaux liquides de sorte que les molécules de cristaux liquides soient inclinées par rapport à la direction normale de la face principale du film d'alignement en l'absence d'une tension appliquée.

10. Dispositif d'affichage à cristaux liquides selon la revendication 8 ou 9, lequel dispositif d'affichage à cristaux liquides comporte une pluralité de pixels, dans lequel, dans chacun parmi la pluralité de pixels, la couche de cristaux liquides comporte une pluralité de domaines de cristaux liquides présentant des azimuts d'alignement de référence respectivement différents.

11. Dispositif d'affichage à cristaux liquides selon la revendication 10, dans lequel la pluralité de domaines de cristaux liquides est constituée de quatre domaines de cristaux liquides.
